# EUROPEAN PATENT SPECIFICATION

(11) **EP 4 481 645 B1**
(45) Date of publication and mention of the grant of the patent: **25.11.2026**
(21) Application number: 23773856.2
(22) Date of filing: 21.03.2023
(51) Int. Cl.: G06Q 10/04

(54) **DATA PROCESSING METHOD AND APPARATUS**
DATENVERARBEITUNGSVERFAHREN UND -VORRICHTUNG
PROCÉDÉ ET APPAREIL DE TRAITEMENT DE DONNÉES

(30) Priority: 24.03.2022 CN 202210303118
(43) Date of publication of application: 25.12.2024
(73) Proprietor: Huawei Technologies Co., Ltd., Shenzhen, Guangdong 518129 (CN)
(72) Inventor: ZHOU, Yucong, Shenzhen, Guangdong 518129 (CN); ZHONG, Zhao, Shenzhen, Guangdong 518129 (CN)
(74) Representative: Eisenführ Speiser
(86) International application number: PCT/CN2023/082786
(87) International publication number: WO 2023/179609

(56) References cited:
- WO-A1-2020/048722
- CN-A- 109 657 805
- CN-A- 109 740 113
- KR-A- 20190 118 937
- MARIANI GIOVANNI ET AL: "DeSpErate++: An Enhanced Design Space Exploration Framework Using Predictive Simulation Scheduling", IEEE TRANSACTIONS ON COMPUTER-AIDED DESIGN OF INTEGRATED CIRCUITS AND SYSTEMS, IEEE, USA, vol. 34, no. 2, 1 February 2015 (2015-02-01), pages 293 - 306, XP011570210, ISSN: 0278-0070, [retrieved on 20150116], DOI: 10.1109/TCAD.2014.2379634
- GIOVANNI MARIANI ET AL: "Multi-processor system-on-chip Design Space Exploration based on multi-level modeling techniques", SYSTEMS, ARCHITECTURES, MODELING, AND SIMULATION, 2009. SAMOS '09. INTERNATIONAL SYMPOSIUM ON, IEEE, PISCATAWAY, NJ, USA, 20 July 2009 (2009-07-20), pages 118 - 124, XP031548012, ISBN: 978-1-4244-4502-8
- LI YANG ET AL: "On Hyperparameter Optimization of Machine Learning Algorithms: Theory and Practice", ARXIV.ORG, CORNELL UNIVERSITY LIBRARY, 201 OLIN LIBRARY CORNELL UNIVERSITY ITHACA, NY 14853, 7 August 2020 (2020-08-07), XP081735520, DOI: 10.1016/J.NEUCOM.2020.07.061

## Description

### CROSS-REFERENCE TO RELATED APPLICATIONS

This application claims priority to Chinese Patent Application No. 202210303118.6, filed with the China National Intellectual Property Administration on March 24, 2022 and entitled "DATA PROCESSING METHOD AND APPARATUS".

### TECHNICAL FIELD

This application relates to the field of artificial intelligence technologies, and in particular, to a data processing method and apparatus.

### BACKGROUND

Black box optimization (black box optimization), also known as hyperparameter optimization (hyperparameter optimization), is an important technology in scientific research and industrial production. There are many complex machine learning systems in actual practice. Some parameters affect results of the machine learning systems. However, a specific mechanism cannot be completely parsed, and only an output result (that is, a black box) of the systems for a given input can be observed. Therefore, these parameters are difficult to be optimized by using efficient methods such as gradient optimization. Different parameter combinations can be tried, and output results of the system can be observed to find an optimal parameter combination. Such an attempt is costly, and requires a long time or more resources to obtain an output result. To reduce a quantity of attempts and obtain optimal input parameters, black box optimization can be used.

Because a neural network has a strong fitting capability, for black box optimization of a neural network predictor (a neural predictor for short) used for prediction, before hyperparameter search, prediction metrics corresponding to a plurality of groups of hyperparameters are obtained in advance, to train the neural predictor. After the training of the neural predictor is completed, the trained neural predictor is used to search for a hyperparameter with a better prediction metric. However, the neuro predictor needs more training data to obtain a neural predictor with generalization. In a black box optimization scenario, overheads of a single evaluation are usually high. Therefore, only a small amount of training data is obtained, and generalization of the neural predictor obtained through training is relatively poor. This results in poor search effect.
G. Mariani et al., "DeSpErate++: An Enhanced Design Space Exploration Framework Using Predictive Simulation Scheduling" discloses a simulation scheduling technique for parallel design environments that includes two orthogonal analytic prediction models to characterize candidate simulations by predicting not only the simulation time but also the configuration quality.

### SUMMARY

Embodiments of this application provide a data processing method and apparatus, to obtain a neural predictor with relatively good generalization by using a small quantity of training samples.

According to a first aspect, an embodiment of this application provides a data processing method. The method includes: receiving hyperparameter information sent by user equipment, where the hyperparameter information indicates a hyperparameter search space corresponding to a user task, wherein the user task is voice recognition; sampling a plurality of hyperparameter combinations from the hyperparameter search space; using a first hyperparameter combination, a plurality of samples included in a training set, and evaluation metrics of the plurality of samples as inputs to a neural predictor, and determining, by using the neural predictor, a prediction metric corresponding to the first hyperparameter combination, to obtain a plurality of prediction metrics corresponding to the plurality of hyperparameter combinations, where the first hyperparameter combination is any one of the plurality of hyperparameter combinations; and sending K hyperparameter combinations to the user equipment, where K is a positive integer, and executing the user task on the user equipment based on the K hyperparameter combinations, where K prediction metrics corresponding to the K hyperparameter combinations are highest K prediction metrics in the plurality of prediction metrics, receiving K evaluation metrics that are corresponding to the K hyperparameter combinations and that are sent by the user equipment; and using the K hyperparameter combinations as K samples, and adding the K samples and the corresponding K evaluation metrics to the training set, wherein the using a first hyperparameter combination, a plurality of samples included in a training set, and evaluation metrics of the plurality of samples as inputs to a neural predictor, and determining, by using the neural predictor, a prediction metric corresponding to the first hyperparameter combination includes: inputting the first hyperparameter combination, the plurality of samples included in the training set, and the evaluation metrics of the plurality of samples to the neural predictor; and determining, by using the neural predictor based on the first hyperparameter combination, the plurality of samples, the evaluation metrics of the plurality of samples, and two anchor features, the prediction metric corresponding to the first hyperparameter combination, where the two anchor features are used to calibrate an encoding feature of a lowest prediction metric of the user task and an encoding feature of a highest prediction metric of the user task, wherein all the method steps except for the execution of the user task are performed by an execution device.

A hyperparameter (hyperparameter) may be understood as an operational parameter of a system, a product, or a process. The hyperparameter information may be understood as a value range or a value condition of some hyperparameters. In a neural network model, a hyperparameter is a parameter whose initial value is set by the user before a learning process starts, and is a parameter that cannot be learned in a training process of the neural network. In a convolutional neural network, these hyperparameters include: a convolution kernel size, a quantity of layers of the neural network, an activation function, a loss function, a type of a used optimizer, a learning rate, a batch size batch_size, a quantity of training rounds: an epoch, and the like. The hyperparameter search space includes some hyperparameters required by the user task. Values of the hyperparameters may be continuously distributed values, or may be discretely distributed values. For example,
lr is numeric(0.0005, 0.02, 0.00025), and indicates a learning rate;
wd is numeric(0.02, 0.4, 0.01), and indicates weight decay;
optim is categorical("AdamW", "LAMB"), and indicates an optimizer type;
dropout is numeric(0.0, 0.3, 0.025), and indicates a dropout probability;
drop_conn_rate is numeric(0.0, 0.4, 0.025), and indicates a drop connection probability;
mixup is numeric(0.0, 1.0, 0.05), and indicates a distribution parameter of mixup;
color is numeric(0.0, 0.5, 0.025), and indicates a color data enhancement strength; and
re_prob is numeric(0.0, 0.4, 0.025), and indicates a random erase probability.

The foregoing definition of the hyperparameter space is merely an example. In an actual application, any hyperparameter that needs to be optimized may be defined.

An input to the neural predictor provided in this application includes not only a hyperparameter. A sample (which may also be referred to as a hyperparameter sample) in the training set and a corresponding evaluation metric are further included. The hyperparameter sample and the evaluation metric of the hyperparameter sample are used to assist in predicting the hyperparameter combination sampled from the hyperparameter search space. Because the input to the neural predictor includes the hyperparameter sample and the evaluation metric that already has the evaluation metric, to be specific, the hyperparameter combination is predicted based on the evaluation metric and the hyperparameter sample that already has the evaluation metric, prediction accuracy can be improved. In the conventional technology, an input to a neural predictor includes only a target evaluation sample, and does not include other reference samples or evaluation metrics. Evaluation metrics of many real samples need to be obtained in advance to train the neural predictor. In this application, an input to the neural predictor includes an evaluation metric and a hyperparameter sample that already has the evaluation metric, and a prediction metric of a target sample has been predicted based on the evaluation metric of the hyperparameter sample, so that accuracy of predicting the prediction metric of the target sample is improved. Therefore, accuracy of adjusting a weight of the neural predictor based on the accuracy of the prediction metric is relatively high, and a quantity of training rounds is small, so that a quantity of used training samples is reduced, and a neuro predictor with relatively good generalization can be obtained by using a small quantity of training samples.

In a possible design, the neural predictor is obtained through training in the following manner: selecting a plurality of samples and evaluation metrics corresponding to the plurality of samples from the training set, and selecting a target sample from the training set; using the plurality of samples, the evaluation metrics corresponding to the plurality of samples, and the target sample as inputs to the neural predictor, and determining, by using the neural predictor, a prediction metric corresponding to the target sample; and adjusting network parameters of the neural predictor based on a result of comparison between the prediction metric of the target sample and an evaluation metric corresponding to the target sample.

In the conventional technology, an input to a neural predictor includes only a target evaluation sample, and does not include other reference samples or evaluation metrics. Evaluation metrics of many real samples need to be obtained in advance to train the neural predictor. In this application, an input to the neural predictor includes a hyperparameter sample that already has an evaluation metric and the evaluation metric, and a prediction metric of a target sample has been predicted based on the evaluation metric of the hyperparameter sample, so that accuracy of predicting the prediction metric of the target sample is improved. Therefore, accuracy of adjusting a weight of the neural predictor based on the accuracy of the prediction metric is relatively high, and a quantity of training rounds is small, so that a quantity of used training samples is reduced, and a neuro predictor with relatively good generalization can be obtained by using a small quantity of training samples.

In some embodiments, before the prediction metrics corresponding to the plurality of hyperparameter combinations are determined by using the neural predictor in each round, the neural predictor may be trained by using the training set. The training set may be updated, and generalization of the neural predictor obtained through training becomes better.

In a possible design, a quantity of samples that are supported to be input to the neural predictor is T, and T is a positive integer; and the determining, by using the neural predictor based on the first hyperparameter combination, the plurality of samples, the evaluation metrics of the plurality of samples, and two anchor features, the prediction metric corresponding to the first hyperparameter combination includes: encoding T input samples by using the neural predictor, to obtain T auxiliary features, and encoding the first hyperparameter combination to obtain a target feature; determining a similarity between the target feature and the T auxiliary features and a similarity between the target feature and the two anchor features by using the neural predictor; determining, by using the neural predictor, T+2 weights based on the similarity between the target feature and the T auxiliary features and the similarity between the target feature and the two anchor features, where the T+2 weights include weights of the T samples and weights of the two anchor features; and weighting, by using the neural predictor, T+2 evaluation metrics based on the T+2 weights to obtain the prediction metric of the first hyperparameter combination, where the T+2 evaluation metrics include evaluation metrics of the T samples and evaluation metrics corresponding to the two anchor features.

In the foregoing design, the sample participates in prediction of a hyperparameter combination in a manner of calculating a similarity, so that a prediction metric of the hyperparameter combination is obtained through weighting evaluation metrics, thereby improving accuracy of a prediction result of the hyperparameter combination. In the conventional technology, an input to a neural predictor includes only a target evaluation sample, and does not include other reference samples or evaluation metrics. Evaluation metrics of many real samples need to be obtained in advance to train the neural predictor. In this application, an input to the neural predictor includes a hyperparameter sample that already has an evaluation metric and the evaluation metric, and a prediction metric of a target sample has been predicted based on the evaluation metric of the hyperparameter sample, so that accuracy of predicting the prediction metric of the target sample is improved. Therefore, accuracy of adjusting a weight of the neural predictor based on the accuracy of the prediction metric is relatively high, and a quantity of training rounds is small, so that a quantity of used training samples is reduced, and a neuro predictor with relatively good generalization can be obtained by using a small quantity of training samples.

In a possible design, the two anchor features are the network parameters of the neural predictor. The two anchor features are learnable as network parameters. In a process of training the neural predictor, the two anchor features can be updated.

In a possible design, the determining a similarity between the target feature and each of the T auxiliary features and a similarity between the target feature and each of the two anchor features by using the neural predictor includes: separately performing, by using the neural predictor, inner product processing on the target feature and the T auxiliary features to obtain the similarity between the target feature and each of the T auxiliary features, and separately performing inner product processing on the target feature and the two anchor features to obtain the similarity between the target feature and each of the two anchor features.

In a possible design, a quantity of hyperparameter samples that are supported to be input to the neural predictor is T; and the using a first hyperparameter combination, a plurality of samples included in a training set, and evaluation metrics of the plurality of samples as inputs to a neural predictor, and determining, by using the neural predictor, a prediction metric corresponding to the first hyperparameter combination includes: inputting T+1 pieces of connected parameter information to the neural predictor, where the T+1 pieces of connected parameter information include T pieces of connected parameter information obtained after each of T samples is connected to a corresponding evaluation metric and connected parameter information obtained after the first hyperparameter combination is connected to a target prediction metric mask, and the target prediction metric mask represents an unknown prediction metric corresponding to the first hyperparameter combination; performing similarity matching on every two pieces of connected parameter information in the T+1 pieces of input connected parameter information by using the neural predictor, to obtain a similarity between the every two pieces of connected parameter information; and determining, by using the neural predictor, the prediction metric of the first hyperparameter combination based on the similarity between the every two pieces of connected parameter information in the T+1 pieces of connected parameter information.

In the foregoing design, the sample participates in prediction of a hyperparameter combination in a manner of calculating a similarity, so that a prediction metric of the hyperparameter combination is obtained through weighting evaluation metrics, thereby improving accuracy of a prediction result of the hyperparameter combination. In the conventional technology, an input to a neural predictor includes only a target evaluation sample, and does not include other reference samples or evaluation metrics. Evaluation metrics of many real samples need to be obtained in advance to train the neural predictor. In this application, an input to the neural predictor includes a hyperparameter sample that already has an evaluation metric and the evaluation metric, and a prediction metric of a target sample has been predicted based on the evaluation metric of the hyperparameter sample, so that accuracy of predicting the prediction metric of the target sample is improved. Therefore, accuracy of adjusting a weight of the neural predictor based on the accuracy of the prediction metric is relatively high, and a quantity of training rounds is small, so that a quantity of used training samples is reduced, and a neuro predictor with relatively good generalization can be obtained by using a small quantity of training samples.

According to a second aspect, an embodiment of this application further provides a data processing apparatus. The apparatus includes: a receiving unit, configured to receive hyperparameter information sent by user equipment, where the hyperparameter information indicates a hyperparameter search space corresponding to a user task, wherein the user task is voice recognition; a processing unit, configured to: sample a plurality of hyperparameter combinations from the hyperparameter search space; and use a first hyperparameter combination, a plurality of samples included in a training set, and evaluation metrics of the plurality of samples as inputs to a neural predictor, and determine, by using the neural predictor, a prediction metric corresponding to the first hyperparameter combination, to obtain a plurality of prediction metrics corresponding to the plurality of hyperparameter combinations, where the first hyperparameter combination is any one of the plurality of hyperparameter combinations; and a sending unit, configured to send K hyperparameter combinations to the user equipment, where K is a positive integer, for execution of the user task on the user equipment based on the K hyperparameter combinations, where K prediction metrics corresponding to the K hyperparameter combinations are highest K prediction metrics in the plurality of prediction metrics, wherein the receiving unit is further configured to receive K evaluation metrics that are corresponding to the K hyperparameter combinations and that are sent by the user equipment; and the processing unit is further configured to: use the K hyperparameter combinations as K samples, and add the K samples and the corresponding K evaluation metrics to the training set, wherein the processing unit is further configured such that the using a first hyperparameter combination, a plurality of samples comprised in a training set, and evaluation metrics of the plurality of samples as inputs to a neural predictor, and determining, by using the neural predictor, a prediction metric corresponding to the first hyperparameter combination comprises: inputting the first hyperparameter combination, the plurality of samples comprised in the training set, and the evaluation metrics of the plurality of samples to the neural predictor; and determining, by using the neural predictor based on the first hyperparameter combination, the plurality of samples, the evaluation metrics of the plurality of samples, and two anchor features, the prediction metric corresponding to the first hyperparameter combination, wherein the two anchor features are used to calibrate an encoding feature of a lowest prediction metric of the user task and an encoding feature of a highest prediction metric of the user task.

In a possible design, the processor is further configured to obtain the neural predictor through training in the following manner: selecting a plurality of samples and evaluation metrics corresponding to the plurality of samples from the training set, and selecting a target sample from the training set; using the plurality of samples, the evaluation metrics corresponding to the plurality of samples, and the target sample as inputs to the neural predictor, and determining, by using the neural predictor, a prediction metric corresponding to the target sample; and adjusting network parameters of the neural predictor based on a result of comparison between the prediction metric of the target sample and an evaluation metric corresponding to the target sample.

In a possible design, the processing unit is specifically configured to: input the first hyperparameter combination, the plurality of samples included in the training set, and the evaluation metrics of the plurality of samples to the neural predictor; and determine, by using the neural predictor based on the first hyperparameter combination, the plurality of samples, the evaluation metrics of the plurality of samples, and two anchor features, the prediction metric corresponding to the first hyperparameter combination, where the two anchor features are used to calibrate an encoding feature of a lowest prediction metric of the user task and an encoding feature of a highest prediction metric of the user task.

In a possible design, a quantity of samples that are supported to be input to the neural predictor is T, and T is a positive integer; and the processing unit is specifically configured to: encode T input samples by using the neural predictor, to obtain T auxiliary features, and encode the first hyperparameter combination to obtain a target feature; determine a similarity between the target feature and the T auxiliary features and a similarity between the target feature and the two anchor features by using the neural predictor; determine, by using the neural predictor, T+2 weights based on the similarity between the target feature and the T auxiliary features and the similarity between the target feature and the two anchor features, where the T+2 weights include weights of the T samples and weights of the two anchor features; and weight, by using the neural predictor, T+2 evaluation metrics based on the T+2 weights to obtain the prediction metric of the first hyperparameter combination, where the T+2 evaluation metrics include evaluation metrics of the T samples and evaluation metrics corresponding to the two anchor features.

In a possible design, the two anchor features are the network parameters of the neural predictor.

In a possible design, a quantity of samples that are supported to be input to the neural predictor is T, and T is a positive integer; and the processing unit is specifically configured to: encode T input samples by using the neural predictor, to obtain T auxiliary features, and encode the first hyperparameter combination to obtain a target feature; determine a similarity between the target feature and each of the T auxiliary features by using the neural predictor; determine, by using the neural predictor based on the similarity between the target feature and each of the T auxiliary features, weights respectively corresponding to the T samples; and weight, by using the neural predictor based on the weights respectively corresponding to the T samples, evaluation metrics corresponding to the T samples to obtain the prediction metric of the first hyperparameter combination.

In a possible design, a quantity of hyperparameter samples that are supported to be input to the neural predictor is T, and T is a positive integer; and the processing unit is specifically configured to: input T+1 pieces of connected parameter information to the neural predictor, where the T+1 pieces of connected parameter information include T pieces of connected parameter information obtained after each of T samples is connected to a corresponding evaluation metric and connected parameter information obtained after the first hyperparameter combination is connected to a target prediction metric mask, and the target prediction metric mask represents an unknown prediction metric corresponding to the first hyperparameter combination; perform similarity matching on every two pieces of connected parameter information in the T+1 pieces of input connected parameter information by using the neural predictor, to obtain a similarity between the every two pieces of connected parameter information; and determine, by using the neural predictor, the prediction metric of the first hyperparameter combination based on the similarity between the every two pieces of connected parameter information in the T+1 pieces of connected parameter information.

In addition, for technical effects brought by any design manner of the second aspect to the seventh aspect, refer to the technical effect brought by different implementations of the first aspect and the second aspect. Details are not described herein.

In this application, based on the implementations provided in the foregoing aspects, the implementations may be further combined to provide more implementations.

### BRIEF DESCRIPTION OF DRAWINGS

FIG. 1 is a schematic diagram of an artificial intelligence main framework applied to this application;
FIG. 2 is a schematic diagram of a structure of a convolutional neural network according to an embodiment of this application;
FIG. 3 is a schematic diagram of a system architecture 300 according to an embodiment of this application;
FIG. 4 is a schematic diagram of a structure of a neural predictor according to an embodiment of this application;
FIG. 5A is a schematic flowchart of a data processing method according to an embodiment of this application;
FIG. 5B is a schematic flowchart of another data processing method according to an embodiment of this application;
FIG. 6 is a schematic diagram of a training process of a neural predictor according to an embodiment of this application;
FIG. 7 is a schematic flowchart of still another data processing method according to an embodiment of this application;
FIG. 8A is a schematic diagram of a processing procedure of a neural predictor according to an embodiment of this application;
FIG. 8B is a schematic diagram of a processing procedure of another neural predictor according to an embodiment of this application;
FIG. 9A is a schematic diagram of a processing procedure of still another neural predictor according to an embodiment of this application;
FIG. 9B is a schematic diagram of a processing procedure of still another neural predictor according to an embodiment of this application;
FIG. 10A is a schematic diagram of a processing procedure of still another neural predictor according to an embodiment of this application;
FIG. 10B is a schematic diagram of a processing procedure of still another neural predictor according to an embodiment of this application;
FIG. 11 is a schematic diagram of a structure of a data processing apparatus according to an embodiment of this application; and
FIG. 12 is a schematic diagram of a structure of another data processing apparatus according to an embodiment of this application.

### DESCRIPTION OF EMBODIMENTS

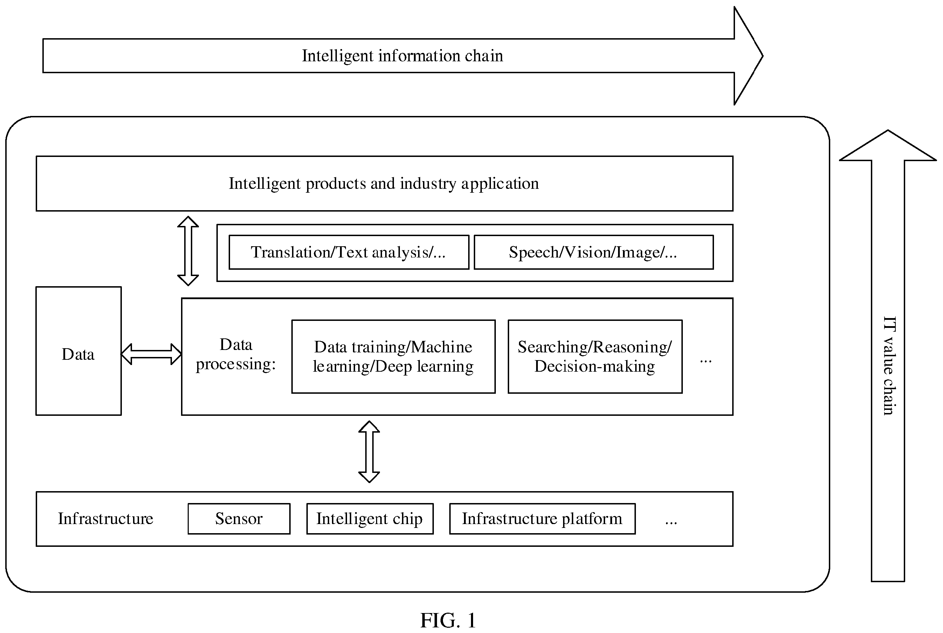

FIG. 1 is a schematic diagram of an artificial intelligence main framework. The main framework describes an overall working procedure of an artificial intelligence system, and is applicable to a requirement of a general artificial intelligence field.

The following describes the artificial intelligence main framework from two dimensions: an "intelligent information chain" (a horizontal axis) and an "IT value chain" (a vertical axis).

The "intelligent information chain" reflects a series of processes from obtaining data to processing the data. For example, the "intelligent information chain" may be a general process of intelligent information perception, intelligent information representation and formation, intelligent reasoning, intelligent decision-making, and intelligent execution and output. In this process, data undergoes a refining process of "data - information - knowledge - intelligence".

The "IT value chain" is an industrial ecological process from underlying infrastructure of artificial intelligence to information (providing and processing technical implementations) to a system, and reflects value brought by artificial intelligence to the information technology industry.

### (1) Infrastructure

Infrastructure provides computing capability support for the artificial intelligence system, to communicate with the outside world and implement support by using an infrastructure platform. The infrastructure communicates with the outside by using sensors. A computing capability is provided by smart chips (hardware acceleration chips such as a CPU, an NPU, a GPU, an ASIC, and an FPGA). The infrastructure platform includes a related platform, for example, a distributed computing framework and network, for assurance and support. The infrastructure platform may include a cloud storage and computing network, an interconnection network, and the like. For example, the sensor communicates with the outside to obtain data, and the data is provided for an intelligent chip in a distributed computing system provided by the infrastructure platform to perform computation.

### (2) Data

Data at an upper layer of the infrastructure indicates a data source in the artificial intelligence field. The data relates to graphics, images, speech, and text, and further relates to internet of things data of conventional devices, and includes service data of a conventional system and perception data such as force, displacement, a liquid level, temperature, and humidity.

### (3) Data processing

Data processing usually includes data training, machine learning, deep learning, searching, reasoning, decision-making, and other methods.

The machine learning and the deep learning may be used for performing symbolic and formal intelligent information modeling, extraction, preprocessing, training, and the like on data.

The reasoning is a process of performing machine thinking and solving problems by simulating an intelligent reasoning mode of humans in a computer or an intelligent system by using formal information and according to a reasoning control policy. Typical functions are searching and matching.

The decision-making is a process of performing decision-making after performing reasoning on intelligent information, and usually provides classification, sorting, prediction, and other functions.

### (4) General capabilities

After data undergoes the foregoing data processing, some general capabilities may be further formed based on a data processing result. For example, the general capabilities may be an algorithm or a general system, for example, translation, text analysis, computer vision processing, speech recognition, and image recognition.

### (5) Intelligent products and industry application

The smart product and the industry application are a product and an application of the artificial intelligence system in various fields, and are package of an overall solution of the artificial intelligence, so that decision-making for intelligent information is productized and an application is implemented. Application fields mainly include smart manufacturing, smart transportation, smart home, smart health care, smart security protection, autonomous driving, a safe city, a smart terminal, and the like.

A neural network used by a neural predictor (neural predictor) in this application is used as an important node, and is configured to implement machine learning, deep learning, searching, reasoning, decision-making, and the like. The neural network mentioned in this application may include a plurality of types, for example, a deep neural network (deep neural network, DNN), a convolutional neural network (convolutional neural network, CNN), a recurrent neural network (recurrent neural network, RNN), a residual network, a neural network using a transformer model, or another neural network. The following describes some neural networks as examples.

Work of each layer in a deep neural network may be described by using a mathematical expression y̅ = a(W · x̅ + b): From a physical layer, the work of each layer in the deep neural network may be understood as completing transformation from an input space to an output space (in other words, from a row space to a column space of a matrix) by using five operations on the input space (a set of input vectors). The five operations include: 1. dimension increase or dimension reduction; 2. scaling up or scaling down; 3. rotation; 4. translation; and 5. "warping". The operations 1, 2, and 3 are performed by using W · x̅, the operation 4 is performed by using +b, and the operation 5 is performed by using a(). The word "space" is used herein for expression because a classified object is not a single thing, but a type of things. Space is a collection of all individuals of such a type of things. W is a weight vector, and each value in the vector represents a weight value of a neuron at the layer in the neural network. The vector *W* determines the spatial transformation from the input space to the output space described above, in other words, the weight W of each layer controls how to perform the spatial transformation.

An objective of training a neural network is to finally obtain a weight matrix (a weight matrix formed by vectors W of many layers) of all layers of a trained neural network. Therefore, a neural network training process is essentially to learn a manner of controlling spatial transformation, more specifically, to learn a weight matrix.

In this application, a neural network using a transformer model may include a plurality of encoders. Each encoder may include a self attention (self attention) layer and a feedforward layer (feedforward layer). The self attention layer may use a multi-headed self-attention (multi-headed self-attention) mechanism. The feedforward layer may use a feedforward neural network (feedforward neural network, FNN). In the feedforward neural network, neurons are arranged hierarchically, and each neuron is connected only to a neuron at a previous layer. An output from the previous layer is received and then is output to a next layer. No feedback is provided between layers. The encoder is configured to convert an input corpus into a feature vector. The multi-headed self-attention layer uses computation between three matrices to compute data input to the encoder. The three matrices include a query matrix Q (query), a key matrix K (key), and a value matrix V (value). The multi-headed self-attention layer encodes a word at a current location in the sequence with reference to a plurality of interdependencies between the word at the current location and words at other locations in the sequence. The feedforward layer is a linear transformation layer, and is configured to perform linear transformation on a representation of each word.

A convolutional neural network (convolutional neuron network, CNN) is a deep neural network with a convolutional structure, and is a deep learning (deep learning) architecture. In the deep learning architecture, multi-layer learning is performed on different abstract levels by using a machine learning algorithm. As a deep learning architecture, the CNN is a feedforward (feedforward) artificial neural network, and each neuron in the feedforward artificial neural network processes data input to the feedforward artificial neural network.

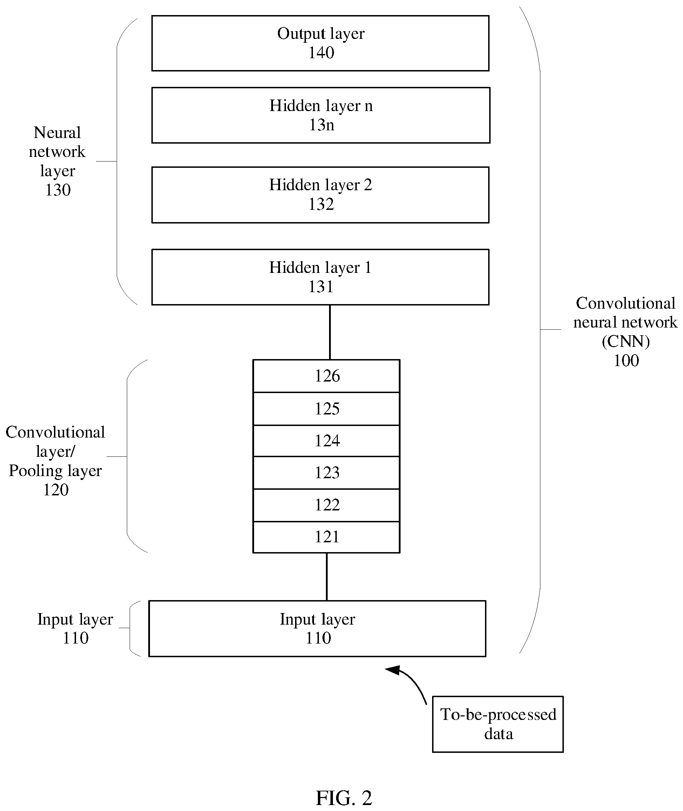

As shown in FIG. 2, a convolutional neural network (CNN) 100 may include an input layer 110, a convolutional layer/pooling layer 120, and a neural network layer 130. The pooling layer is optional. As shown in FIG. 2, for example, the convolutional layer/pooling layer 120 may include layers 121 to 126. In an implementation, the layer 121 is a convolutional layer, the layer 122 is a pooling layer, the layer 123 is a convolutional layer, the layer 124 is a pooling layer, the layer 125 is a convolutional layer, and the layer 126 is a pooling layer. In another implementation, the layer 121 and the layer 122 are convolutional layers, the layer 123 is a pooling layer, the layer 124 and the layer 125 are convolutional layers, and the layer 126 is a pooling layer. That is, an output of a convolutional layer may be used as an input of a subsequent pooling layer, or may be used as an input to another convolutional layer to continue a convolution operation. The convolutional layer 121 is used as an example. The convolutional layer 121 may include a plurality of convolution operators, and the convolution operators are also referred to as convolution kernels. The convolution operator may be essentially a weight matrix, and the weight matrix is usually predefined. Image processing is used as an example, different features in an image are extracted by using different weight matrices. For example, one weight matrix is used to extract image edge information, another weight matrix is used to extract a specific color of the image, and still another weight matrix is used to blur unnecessary noise in the image.

Weight values in these weight matrices need to be obtained through a large amount of training in an actual application. Each weight matrix formed by using the weight values obtained through training may extract information from input data, thereby helping the convolutional neural network 100 to perform correct prediction.

When the convolutional neural network 100 includes a plurality of convolutional layers, a larger quantity of general features are usually extracted at an initial convolutional layer (for example, the convolutional layer 121). The general features may be also referred to as low-level features. As a depth of the convolutional neural network 100 increases, a feature extracted at a more subsequent convolutional layer (for example, the convolutional layer 126) is more complex, for example, a higher-level semantic feature. A feature with higher semantics is more applicable to a to-be-resolved problem.

### Pooling layer

Because a quantity of training parameters usually needs to be reduced, a pooling layer usually needs to be periodically introduced after a convolutional layer. To be specific, for the layers 121 to 126 in the layer 120 shown in FIG. 2, one convolutional layer may be followed by one pooling layer, or a plurality of convolutional layers may be followed by one or more pooling layers. During image processing, the pooling layer is only used to reduce a space size of the image. The pooling layer may include an average pooling operator and/or a maximum pooling operator, to perform sampling on the input image to obtain an image with a small size. The average pooling operator may compute a pixel value in the image within a specific range, to generate an average value. The maximum pooling operator may be used to select a pixel with a maximum value in a specific range as a maximum pooling result. In addition, similar to a case in which a size of a weight matrix in the convolutional layer should be related to a size of the image, an operator in the pooling layer should be also related to the size of the image. A size of a processed image output from the pooling layer may be less than a size of an image input to the pooling layer. Each pixel in the image output from the pooling layer represents an average value or a maximum value of a corresponding sub-region of the image input to the pooling layer.

After processing is performed by the convolutional layer/pooling layer 120, the convolutional neural network 100 still cannot output required output information. As described above, at the convolutional layer/pooling layer 120, only a feature is extracted, and parameters resulting from an input image are reduced. However, to generate final output information (required class information or other related information), the convolutional neural network 100 needs to use the neural network layer 130 to generate an output of one required class or outputs of a group of required classes. Therefore, the neural network layer 130 may include a plurality of hidden layers (131, 132, ..., and 13n shown in FIG. 2) and an output layer 140. Parameters included in the plurality of hidden layers may be obtained through pre-training based on related training data of a specific task type. For example, the task type may include image recognition, image classification, super-resolution image reconstruction, and the like.

At the neural network layer 130, the plurality of hidden layers are followed by the output layer 140, that is, the last layer of the entire convolutional neural network 100. The output layer 140 has a loss function similar to a categorical cross entropy, and the loss function is specifically used to calculate a prediction error. Once forward propagation (for example, propagation from 110 to 140 in FIG. 2 is forward propagation) of the entire convolutional neural network 100 is completed, backpropagation (for example, propagation from 140 to 110 in FIG. 2 is backpropagation) is started to update a weight value and a deviation of each layer mentioned above, to reduce a loss of the convolutional neural network 100 and an error between a result output by the convolutional neural network 100 by using the output layer and an ideal result.

It should be noted that the convolutional neural network 100 shown in FIG. 2 is merely used as an example of a convolutional neural network. In specific application, the convolutional neural network may alternatively exist in a form of another network model, for example, a plurality of parallel convolutional layers/pooling layers, and extracted features are all input to the entire neural network layer 130 for processing.

In embodiments of this application, black box optimization is performed by using a neural predictor. The black box optimization can be used to find the best operational parameter of a system, a product, or a process, and performance of the system, the product, or the process can be measured or evaluated as a function of the parameter. The black box optimization may also be understood as hyperparameter optimization, and is used to optimize a hyperparameter. A hyperparameter (hyperparameter) is a parameter whose value is set before a learning process starts, and a parameter that is not obtained through training. The hyperparameter may be understood as an operational parameter of a system, a product, or a process. For example, hyperparameter optimization of a neural network may be understood as black box optimization. Various currently used neural networks are trained based on data and a learning algorithm, to obtain a model that can be used for prediction and estimation. If performance of the model is poor, experienced personnel adjust a network structure. A parameter that is not obtained through training, for example, a learning rate in an algorithm or a quantity of samples in each batch, is usually referred to as a hyperparameter. Usually, the hyperparameter is adjusted based on a large amount of practical experience, so that a neural network model performs better until an output of the neural network meets a requirement. For example, when this application is applied to hyperparameter optimization of a neural network, a hyperparameter combination in this application may include values of all or some hyperparameters of the neural network. During neural network training, a weight of each neuron is optimized based on a value of a loss function, to reduce a value of the loss function. Therefore, the model may be obtained by using an algorithm to optimize a parameter. The hyperparameter is used to adjust an entire network training process, for example, a quantity of hidden layers in the convolutional neural network, a size of a kernel function, or a quantity of kernel functions. The hyperparameter is not directly used in the training process, but only for configuring a variable.

Usually, Bayesian optimization can be used for black box optimization. The Bayesian optimization is based on a Gaussian model. An objective function of a location is modeled based on a known sample to obtain a mean function and confidence of the mean function. For a point, a larger confidence range indicates lower uncertainty of modeling for the point, that is, a higher probability that a real value deviates from a predicted value of a mean value at the point. The Bayesian optimization determines, based on the mean value and confidence, which point to model next time. In the Bayesian optimization method, usually, continuity assumption is performed on a target problem. For example, a larger hyperparameter value indicates a larger prediction result. However, if the target problem does not conform to the continuity assumption, modeling effect of the Bayesian optimization is poor, and sampling efficiency is also reduced.

The neural predictor uses a neural network. Compared with the Bayesian optimization, the neural network is used to replace the Gaussian model to model the target problem. However, in the neural network manner, a relatively large amount of training data is needed to obtain a neural predictor with generalization. In a black box optimization scenario, overheads of a single evaluation are relatively large. Therefore, only a small quantity of training samples are obtained, and consequently generalization of the neural predictor obtained through training is relatively poor. In this way, a found hyperparameter is not a hyperparameter with an optimal evaluation result.

In view of this, embodiments of this application provide a data processing method, to assist in prediction of a target hyperparameter combination based on a training sample. Because evaluation results corresponding to the hyperparameter combination in a training sample are all verified by a user, accuracy is relatively high. The prediction of the target hyperparameter combination uses assistance of a training sample verified by a user. Compared with a case in which the assistance of the training sample verified by the user is not used, in the solution used in embodiments of this application, accuracy of a prediction result of predicting the target hyperparameter combination is higher. Further, to obtain a neural predictor with relatively good generalization, compared with a solution in which the assistance of the training sample verified by the user is not used, in the solution used in embodiments of this application, a small quantity of training samples are used to obtain a neural predictor with relatively good generalization.

Embodiments of this application may be used for hyperparameter optimization of a plurality of complex systems. Scenarios to which embodiments of this application may be applied may include molecular design, material science, factory debugging, chip design, neural network structure design, neural network training and optimization, and the like. Hyperparameters are, for example, adjustable parameters (for example, a component or constituent type or quantity, a production sequence, and production timing) used to optimize a physical product or a process of producing a physical product (for example, alloy, metamaterial, a concrete mixture, a process of pouring concrete, a drug mixture, or a process of performing treatment), and for another example, design parameters used to optimize a neural network structure, such as a quantity of convolutional layers, a convolution kernel size, an expansion size, a location of a rectified linear unit (rectified linear unit, ReLU), and other parameters.

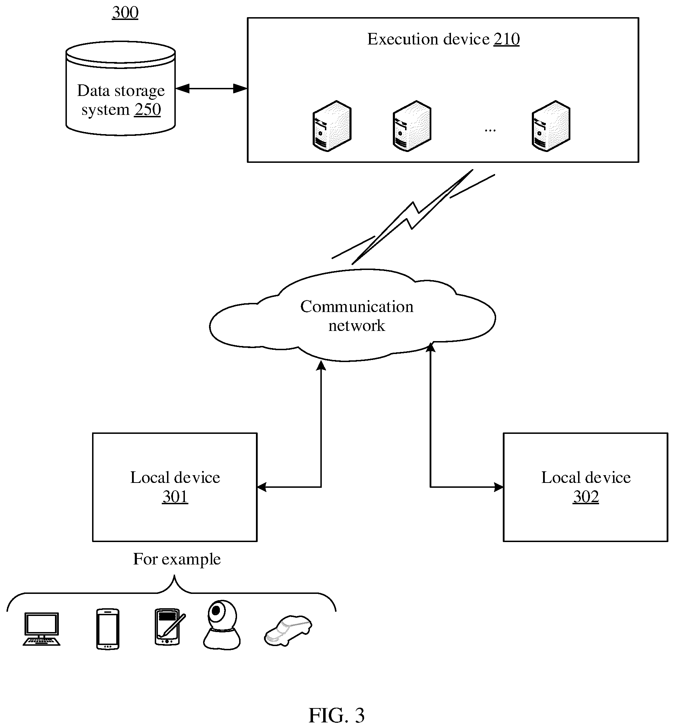

The data processing method provided in embodiments of this application is performed by an execution device. The execution device may be implemented by one or more computing devices. For example, FIG. 3 shows a system architecture 300 according to an embodiment of this application. The system architecture 300 includes an execution device 210. The execution device 210 may be implemented by one or more computing devices. The execution device 210 may be disposed on one physical site, or distributed on a plurality of physical sites. The system architecture 300 further includes a data storage system 250. Optionally, the execution device 210 cooperates with other computing devices, for example, a data storage, a router, a load balancer, or another device. The execution device 210 may implement the data processing method provided in this application by using data in the data storage system 250 or by invoking program code in the data storage system 250. One or more computing devices may be deployed in a cloud network. In an example, in the data processing method provided in this embodiment of this application, the one or more computing devices in the cloud network are deployed in a form of a service, and user equipment accesses a cloud service by using the network. In another example, the data processing method provided in embodiments of this application may be deployed on one or more local computing devices in a form of a software tool.

A user may operate respective user equipment (for example, a local device 301 and a local device 302) to interact with the execution device 210. Each local device may be any computing device, such as a personal computer, a computer workstation, a smartphone, a tablet computer, an intelligent camera, a smart automobile, another type of cellular phone, a media consumption device, a wearable device, a set-top box, or a game console.

A local device of each user may interact with the execution device 210 through a communication network compliant with any communication mechanism/communication standard. The communication network may be a wide area network, a local area network, a point-to-point connection, or any combination thereof.

In another implementation, one or more aspects of the execution device 210 may be implemented by each local device. For example, the local device 301 may provide local data or feed back an evaluation result for the execution device 210.

It should be noted that all functions of the execution device 210 may also be implemented by the local device. For example, the local device 301 implements a function of the execution device 210 and provides a service for a user of the local device 301, or provides a service for a user of the local device 302.

The following describes in detail the data processing method provided in embodiments of this application with reference to the accompanying drawings.

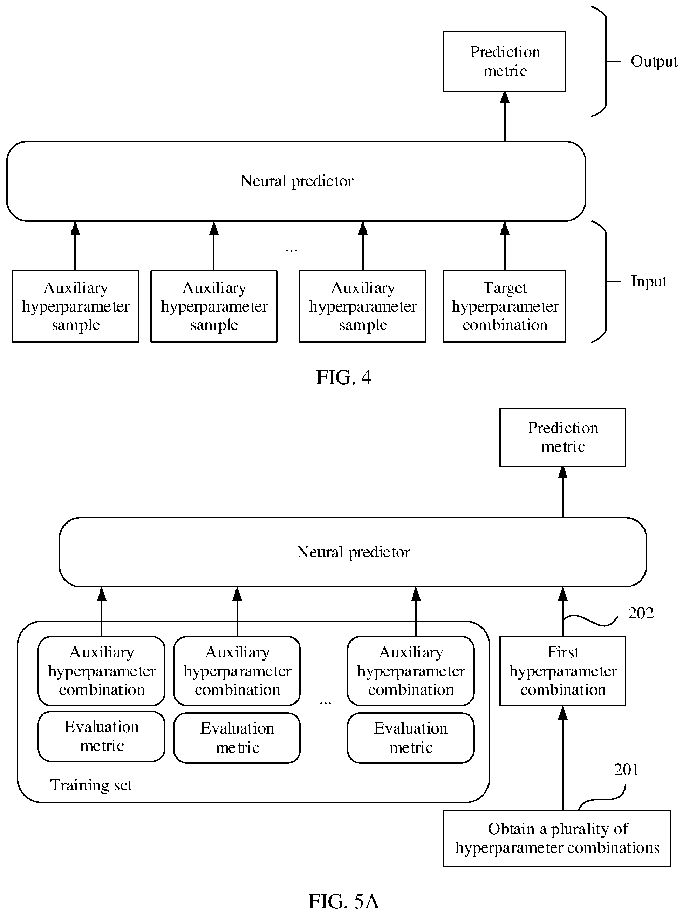

FIG. 4 is a schematic diagram of a structure of a neural predictor according to an embodiment of this application. An input to the neural predictor is a plurality of samples (which may also be referred to as hyperparameter samples or auxiliary hyperparameter samples) in a training set, evaluation metrics respectively corresponding to the plurality of samples, and a target hyperparameter combination that needs to be predicted. An output of the neural predictor is a prediction metric of the target hyperparameter combination that needs to be predicted. The plurality of auxiliary hyperparameter samples are used to assist the neural predictor in predicting the prediction metric of the target hyperparameter combination that needs to be predicted.

The following describes in detail the data processing method provided in embodiments of this application with reference to a structure of the neural predictor.

FIG. 5A is a schematic flowchart of a data processing method according to this application. The method may be performed by an execution device, for example, the execution device 210 in FIG. 3.

201. Obtain a plurality of hyperparameter combinations.

A hyperparameter search space includes a hyperparameter required by a user task. Hyperparameters may be sampled from the hyperparameter search space, and values of the plurality of hyperparameters are obtained as a hyperparameter combination. It should be understood that one hyperparameter combination may include values of one or more hyperparameters.

When the plurality of hyperparameter combinations are obtained, hyperparameter information is received from user equipment. The hyperparameter information indicates the hyperparameter search space corresponding to the user task. Therefore, the plurality of hyperparameter combinations may be sampled from the hyperparameter search space.

The user equipment sends the hyperparameter information to the execution device 210 by invoking a service.

Specifically, the hyperparameter search space may include a plurality of hyperparameters required by the user task. Values of the hyperparameters may be continuously distributed values, or may be discretely distributed values. For example, the hyperparameter search space may include a value range [1, 20] of a hyperparameter A, and a value of a hyperparameter B may include 2, 3, 6, 7, and the like. Therefore, when the hyperparameter search space is sampled, a value may be randomly selected from continuously distributed values, or from discretely distributed values, to obtain a group of hyperparameter combinations. Optionally, the hyperparameter search space may be sampled in a plurality of manners, for example, in a random sampling manner, or in a probability distribution sampling manner. In the following steps, prediction performed for one hyperparameter combination is used as an example. For example, prediction of a first hyperparameter combination is used as an example. If the first hyperparameter combination is any one of the plurality of hyperparameter combinations, prediction of each hyperparameter combination may be a manner of predicting the first hyperparameter combination.

202. Use the first hyperparameter combination, the plurality of hyperparameter samples in the training set, and the evaluation metrics of the plurality of hyperparameter samples as inputs to the neural predictor, and determine, by using the neural predictor, a prediction metric corresponding to the first hyperparameter combination. For ease of distinguishing, the plurality of hyperparameter samples are referred to as auxiliary hyperparameter samples. The plurality of auxiliary hyperparameter samples are used to assist the neural predictor in predicting the prediction metric of the first hyperparameter combination. The auxiliary hyperparameter samples used to assist the neural predictor in predicting the first hyperparameter combination may also be referred to as a "support sample", or may have another name. This is not specifically limited in this embodiment of this application.

For the plurality of hyperparameter combinations, prediction metrics respectively corresponding to the plurality of hyperparameter combinations may be obtained through a plurality of iterative evaluations. One auxiliary hyperparameter sample may be understood as one hyperparameter combination. For ease of distinguishing, a hyperparameter combination corresponding to auxiliary hyperparameter samples of the training set is referred to as an auxiliary hyperparameter combination. The auxiliary hyperparameter combination is also sampled from the hyperparameter search space. A plurality of hyperparameter combinations are all different from a plurality of auxiliary hyperparameter combinations. An evaluation metric corresponding to an auxiliary hyperparameter combination may be obtained through evaluation of the auxiliary hyperparameter combination by using a user task. Evaluation metrics corresponding to the hyperparameter samples included in the training set may also be obtained through evaluation in another manner.

It should be noted that, for ease of description, in this embodiment of this application, a metric result of a hyperparameter combination obtained through prediction by using the neural predictor is referred to as a prediction metric, and a metric result of a hyperparameter combination obtained through evaluation by the user task is referred to as an evaluation metric.

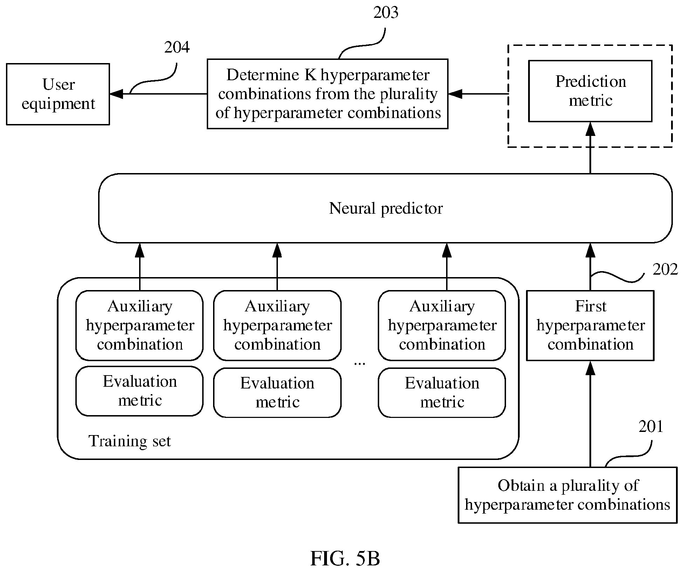

In some embodiments, referring to FIG. 5B, after step 202 is performed to obtain the prediction metrics respectively corresponding to the plurality of hyperparameter combinations, the execution device may perform step 203 and step 204.

203. The execution device may determine K hyperparameter combinations from the plurality of hyperparameter combinations. Specifically, obtaining the K hyperparameter combinations with optimal (or highest) prediction metrics from the plurality of hyperparameter combinations may be understood in such a way that prediction metrics respectively corresponding to the K hyperparameter combinations are all higher than a prediction metric corresponding to any prediction hyperparameter combination other than the K hyperparameter combinations in the plurality of hyperparameter combinations, where K is a positive integer.

204. The execution device may send the K hyperparameter combinations to the user equipment.

In a possible implementation, in this embodiment of this application, the training set may be further updated. Which hyperparameter combinations are updated to the training set may be determined based on results of the plurality of iterative evaluations for the plurality of hyperparameter combinations.

After the execution device sends the K hyperparameter combinations to the user equipment, the user equipment may trigger a user task. A user executes a voice recognition task based on a received hyperparameter combination. The user task may separately evaluate the K hyperparameter combinations, and then send evaluation metrics of the K hyperparameter combinations to the execution device. The execution device adds the K hyperparameter combinations and the evaluation metrics respectively corresponding to the K hyperparameter combinations to the training set as auxiliary hyperparameter samples.

It should be understood that, in this embodiment, an example in which a function of the execution device is implemented by one or more computing devices deployed in a cloud network is used. That is, actions of sending the K hyperparameter combinations and receiving evaluation results are performed between the one or more computing devices in the cloud network and the user equipment. In some scenarios, when the data processing method is deployed on one or more local computing devices, the foregoing actions of sending the K hyperparameter combinations and receiving the evaluation results may be performed between different components of the computing devices, or between different computing devices, or may be run when a software program of the computing device is executed, to obtain the evaluation results of the K hyperparameter combinations from storage space of a current computing device. For example, a component configured to perform an iterative sampling process in a local computing device sends the K hyperparameter combinations to a component configured to evaluate a hyperparameter combination. The component configured to evaluate the hyperparameter combination then performs an evaluation operation, and sends evaluation metrics obtained through evaluation to the component configured to perform the iterative sampling process.

In this embodiment of this application, for ease of description, step 201 to step 204 are referred to as an iterative sampling process. The execution device may perform a plurality of rounds of the iterative sampling process including step 201 to step 204.

After the execution device adds the K hyperparameter combinations and the evaluation metrics respectively corresponding to the K hyperparameter combinations to the training set as auxiliary hyperparameter samples, an updated training set may be used to perform a next round of the iterative sampling process.

When the iterative sampling process is performed, the iterative sampling process is stopped when an iterative sampling stop condition is met. For example, the iterative sampling stop condition may include at least one of the following:
(1) A quantity of iterative sampling rounds reaches N, where N is an integer greater than 1. After N rounds of iterative sampling are performed, the iterative sampling process is stopped.
(2) An optimal evaluation metric in the training set does not change in M consecutive rounds of the iterative sampling process. Each time the training set is updated, an optimal evaluation metric included in the training set may be recorded. For example, after an i^{th} round of iterative sampling, the optimal evaluation metric included in the training set is A, and after an (i+1)^{th} round of iterative sampling, the optimal evaluation metric included in the training set is still A. By analogy, after an (i+M-1)^{th} round of iterative sampling, the optimal evaluation metric included in the training set is still A. From the i^{th} round of iterative sampling to the (i+M-1)^{th} round of iterative sampling, the optimal evaluation metric included in the training set does not change. Therefore, a next round of the iterative sampling process is not performed. Optionally, when the quantity of iterative sampling rounds reaches a specified maximum quantity of sampling rounds, the condition (2) is not met, and a next round of the iterative sampling process is not performed.
(3) The optimal evaluation metric in the training set reaches a specified metric. Specifically, after a plurality of rounds of the iterative sampling process, the optimal evaluation metric in the training set reaches the specified metric, and therefore, a next round of the iterative sampling process is not performed. Optionally, after the quantity of iterative sampling rounds reaches a specified maximum quantity of sampling rounds, the optimal evaluation metric in the training set still does not reach the specified metric, and a next round of the iterative sampling process is not performed.

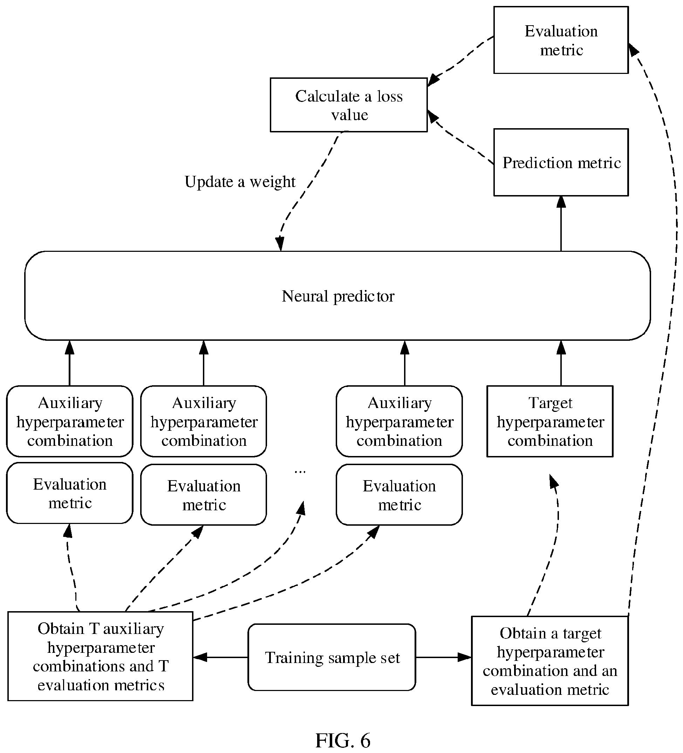

The neural predictor in this embodiment of this application is obtained through training by using the training set. Referring to FIG. 6, each time an iterative training process is performed, one sample is selected from the training set as a target sample. The target sample may be understood as a target hyperparameter combination in the training set. The training set further includes an evaluation metric corresponding to the target hyperparameter combination. For ease of distinguishing, the target hyperparameter combination and the evaluation metric corresponding to the target hyperparameter combination are referred to as a target sample combination {target hyperparameter combination, evaluation metric}. The input to the neural predictor includes the target hyperparameter combination. In addition, a plurality of hyperparameter samples further need to be selected from the training set as auxiliary hyperparameter samples. The training set further includes evaluation metrics corresponding to the auxiliary hyperparameter samples. For ease of description, an auxiliary hyperparameter sample (namely, an auxiliary hyperparameter combination) and a corresponding evaluation metric are referred to as an auxiliary sample combination {auxiliary hyperparameter combination, evaluation metric}. It should be noted that the plurality of auxiliary hyperparameter samples selected from the training set are different from the target sample. In FIG. 6, an example in which a quantity of input auxiliary hyperparameter samples is T is used. T auxiliary sample combinations and the target hyperparameter combination are input to the neural predictor, and the neural predictor outputs a prediction metric of the target hyperparameter combination. Further, the prediction metric of the target hyperparameter combination is compared with an evaluation metric corresponding to the target hyperparameter combination, a loss value is calculated, and then a weight of the neural predictor is updated based on the loss value.

A loss function may be used to calculate the loss value. The loss function is an objective function in a weight optimization process. Generally, a smaller value of the loss function indicates a more accurate result output by the neural predictor. A training process of the neural predictor may be understood as a process of minimizing the loss function. Common loss functions may include a logarithmic loss function, a square loss function, an exponential loss function, and the like.

When the weight of the neural predictor is updated based on the loss value, the weight may be optimized according to an optimization algorithm, for example, a gradient descent algorithm, a stochastic gradient descent algorithm, or an adaptive moment estimation (adaptive moment estimation, Adam) algorithm.

In this embodiment of this application, training of the neural predictor may be performed in advance, or may be performed in each round of the iterative sampling process. For example, before the iterative evaluation process is performed, the neural predictor is first trained through a plurality of times of iterative training, or each time the training set is updated, the neural predictor is trained, and then a plurality of hyperparameter combinations are predicted based on a neural predictor that is obtained through training in a current round of the sampling process. In other words, the iterative evaluation process and the iterative training process are performed in a cross manner.

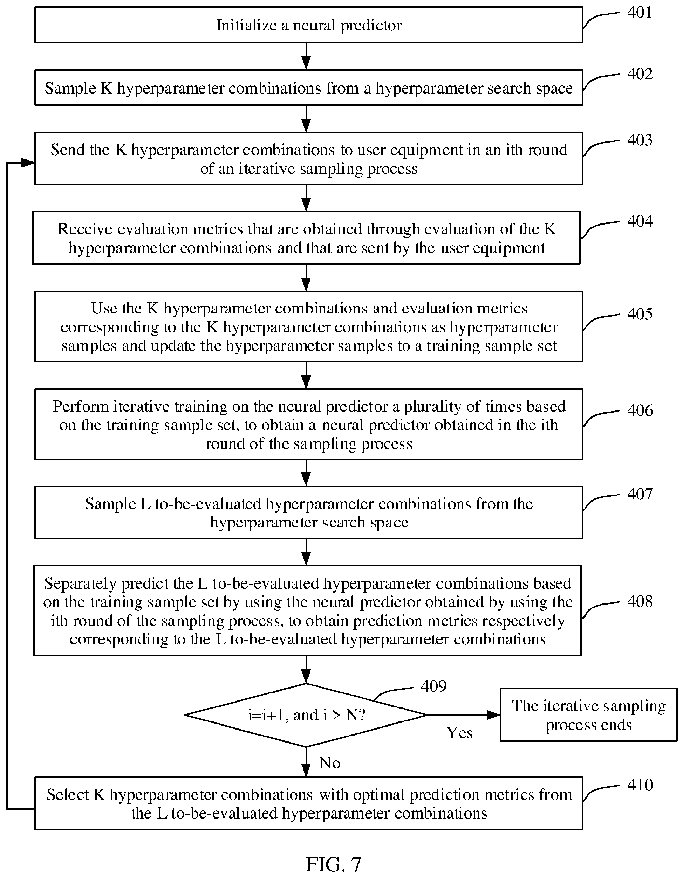

FIG. 7 is a schematic flowchart of another data processing method according to an embodiment of this application. In FIG. 7, an example in which an iterative evaluation process and an iterative training process are performed in a cross manner in each round of the iterative sampling process is used. For example, in each round of the sampling process, K hyperparameter samples are updated in the training set. A maximum number of sampling rounds is N.

401. Initialize the neural predictor, and perform 402. It may be understood that an initial training set is empty.

402. Sample K hyperparameter combinations from the hyperparameter search space, and perform 403.

403. Send the K hyperparameter combinations to the user equipment in an i^{th} round of the iterative sampling process.

404. Receive evaluation metrics that are obtained through evaluation of the K hyperparameter combinations and that are sent by the user equipment. The user equipment may trigger the user task to perform evaluation to obtain the evaluation metrics. An evaluation process and an evaluation result of the user task are not specifically limited in this embodiment of this application. The evaluation of the user task may be performed manually, or may be performed by using the user equipment.

It should be understood that, in this embodiment, an example in which the data processing method is deployed on one or more computing devices in a cloud network is used. That is, actions of sending the K hyperparameter combinations and receiving evaluation results are performed between the one or more computing devices in the cloud network and the user equipment. In some scenarios, when the data processing method is deployed on one or more local computing devices, the foregoing actions of sending the K hyperparameter combinations and receiving the evaluation results may be performed between different components of the computing devices, or between different computing devices, or may be run when a software program of the computing device is executed, to obtain the evaluation metrics of the K hyperparameter combinations from storage space of a current computing device. For example, step 403 may be replaced with the following: A component configured to perform an iterative sampling process in a local computing device sends the K hyperparameter combinations to a component configured to evaluate a hyperparameter combination. Then, step 404 may be replaced with the following: The component configured to evaluate the hyperparameter combination then performs an evaluation operation, and sends evaluation metrics obtained through evaluation to the component configured to perform the iterative sampling process.

405. Use the K hyperparameter combinations and evaluation metrics corresponding to the K hyperparameter combinations as hyperparameter samples and update the hyperparameter samples to the training set.

406. Perform iterative training on the neural predictor a plurality of times based on the training set, to obtain a neural predictor obtained in the i^{th} round of the sampling process. A quantity of iterative training rounds is not specifically limited in this embodiment of this application. For the training process, refer to the description of the embodiment corresponding to FIG. 6. Details are not described herein again.

407. Sample L hyperparameter combinations from the hyperparameter search space. It may be understood that the L hyperparameter combinations are all different from the previously sampled hyperparameter combinations. That is, when the L hyperparameter combinations are used, L is greater than K. L may be a multiple of K. For example, K=16, and L=1000. For another example, K=20, and L=1500. This is not specifically limited in this embodiment of this application, and may be set based on a requirement.

408. Separately predict the L hyperparameter combinations based on the training set by using the neural predictor obtained by using the i^{th} round of the sampling process, to obtain prediction metrics respectively corresponding to the L hyperparameter combinations. Specifically, when prediction is performed for each hyperparameter combination, T hyperparameter samples are selected from the training set as auxiliary hyperparameter samples, and the auxiliary hyperparameter samples are input to the neural predictor to output a prediction metric of the hyperparameter combination. After L rounds of iterative evaluation, the prediction metrics respectively corresponding to the L hyperparameter combinations are obtained.

409. Perform i=i+1, and determine whether i is greater than N. (whether a value of i is greater than N). If i is greater than N, the iterative sampling process ends; and if i is not greater than N, 410 is performed. Herein, an example in which the iterative sampling stop condition is that the quantity of iterative sampling rounds reaches the maximum quantity of sampling rounds is used.

410. Select K hyperparameter combinations with optimal prediction metrics from the L hyperparameter combinations, and continue to perform 403.

It should be noted that in the above, the neural predictor is trained and the L hyperparameter combinations are predicted in each round of the iterative sampling process. In some embodiments, a quantity of rounds of training the neural predictor may be less than the quantity of iterative sampling rounds. For example, the neural predictor is trained and the L hyperparameter combinations are predicted in the first a rounds of the iterative sampling process in the N rounds of the iterative sampling process. In subsequent N-a rounds of the iterative sampling process, the neural predictor is no longer trained, and only prediction of the L hyperparameter combinations is performed.

The following describes a processing manner of the neural predictor in this embodiment of this application by using an example.

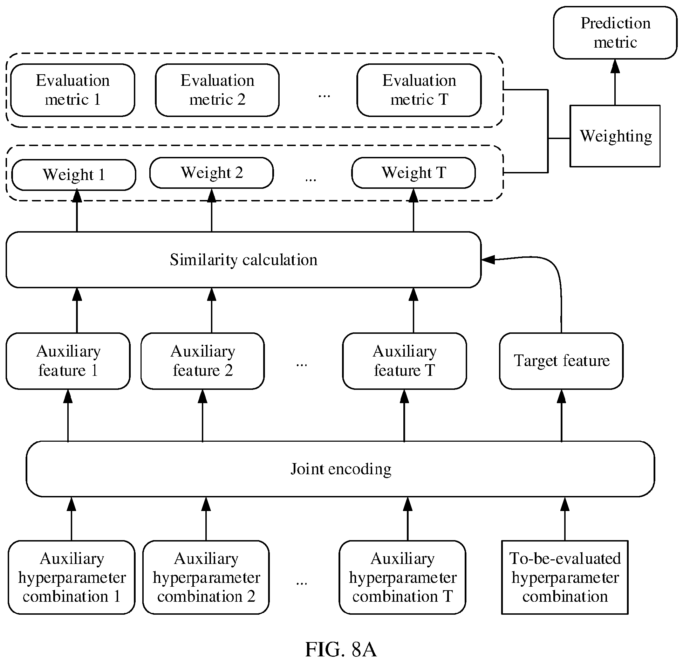

FIG. 8A is a schematic diagram of a processing procedure of a neural predictor according to an embodiment of this application. A plurality of hyperparameter samples are selected from a training set as auxiliary hyperparameter samples. The training set further includes evaluation metrics corresponding to the auxiliary hyperparameter samples. An input to the neural predictor includes T auxiliary samples, evaluation metrics corresponding to the T auxiliary samples, and a target hyperparameter combination. In FIG. 8A, the T auxiliary hyperparameter samples are respectively referred to as auxiliary hyperparameter samples 1 to N, and evaluation metrics corresponding to the auxiliary hyperparameter samples 1 to N are respectively referred to as evaluation metrics 1 to N, namely, {auxiliary hyperparameter sample 1, evaluation metric 1}, ..., {auxiliary hyperparameter sample T, evaluation metric T}. The neural predictor performs joint encoding on the T auxiliary hyperparameter samples and the target hyperparameter combination to obtain T+1 features. For ease of distinguishing, encoded features corresponding to the T auxiliary hyperparameter samples are referred to as auxiliary features, and an encoded feature corresponding to the target hyperparameter combination is referred to as a target feature.

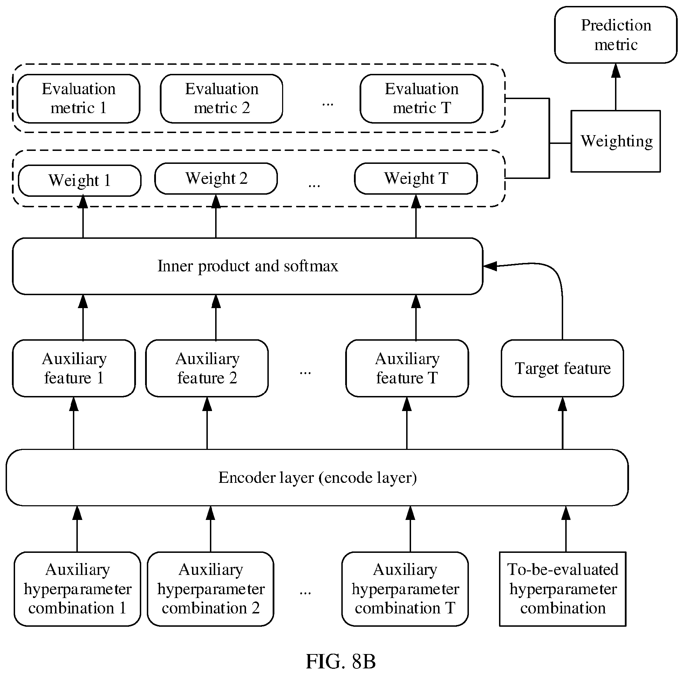

For example, referring to FIG. 8B, the neural predictor includes at least one encoder layer (encoder layer). In FIG. 8B, two encoder layers are used as an example. For example, the encoder layer may be an encoding module in a transformer structure. The encoder layer includes a self attention layer (Attention Layer) and a feedforward layer (feedforward layer). The self attention layer is configured to perform similarity calculation on every two of the T+1 hyperparameter combinations (including the hyperparameter combinations corresponding to the auxiliary hyperparameter samples and the target hyperparameter combination) obtained by combining the T auxiliary hyperparameter samples and the target hyperparameter combination to obtain a similarity matrix, and then weight the T+1 hyperparameter combinations based on the similarity matrix to obtain T+1 features, where the T+1 features are sent to the feedforward layer for feature transformation, and finally, the encoder layer outputs T+1 encoded features. Fusion encoding is performed on the T+1 hyperparameter combinations by using at least one encoder layer.

Further, the neural predictor determines a similarity between the target feature and each of the T auxiliary features, and then determines, based on the similarity between the target feature and each of the T auxiliary features, weights respectively corresponding to the T auxiliary hyperparameter samples. The neural predictor weights, based on the weights respectively corresponding to the T auxiliary hyperparameter samples, evaluation metrics included in the T auxiliary hyperparameter samples to obtain a prediction metric of the target hyperparameter combination.

For example, referring to FIG. 8B, the neural predictor separately performs inner product processing on the target feature and the T auxiliary features to obtain the similarity between the target feature and each of the T auxiliary features. Then, the neural predictor converts, by using a softmax function, the similarity between the target feature and each of the T auxiliary features into the weights respectively corresponding to the T auxiliary hyperparameter samples.

The processing procedure of the neural predictor shown in FIG. 8A and FIG. 8B is applicable to both a training process and an evaluation process. In the training process, the target hyperparameter combination also comes from the training set. In this way, a comparison result that is output by the neural predictor and that is between a prediction metric corresponding to a target hyperparameter combination and an evaluation metric that is in the training set and that is corresponding to the target hyperparameter combination is used to adjust a weight of the neural predictor.

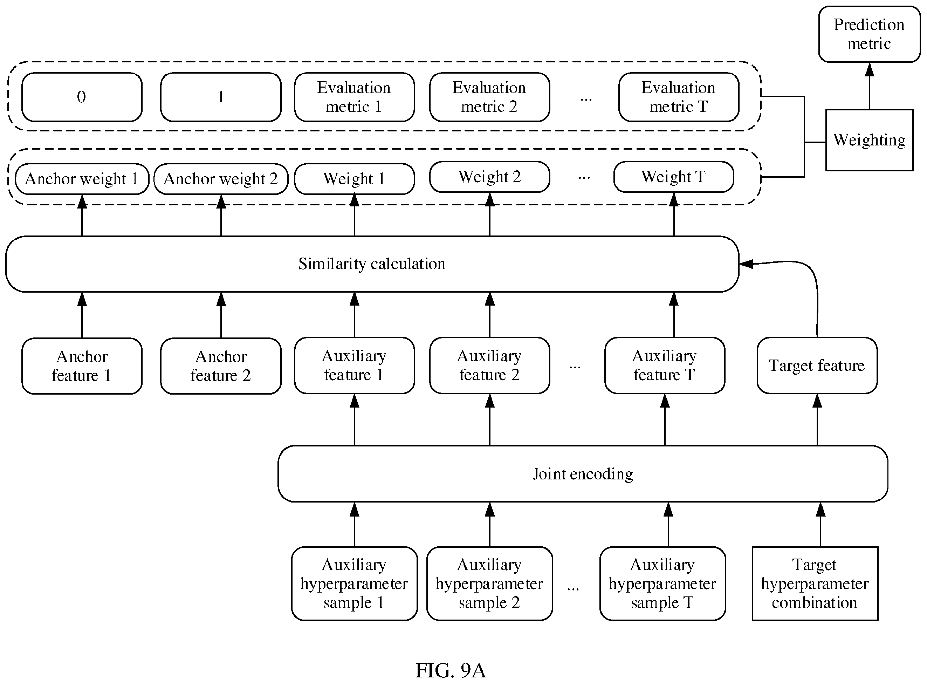

FIG. 9A is a schematic diagram of a processing procedure of another neural predictor according to an embodiment of this application. An input to the neural predictor includes T auxiliary hyperparameter samples, evaluation metrics corresponding to the T auxiliary hyperparameter samples, and a target hyperparameter combination. In FIG. 9A, the T auxiliary hyperparameter samples are respectively referred to as auxiliary hyperparameter samples 1 to N, and evaluation metrics corresponding to the auxiliary hyperparameter samples 1 to N are respectively referred to as evaluation metrics 1 to N, namely, {auxiliary hyperparameter sample 1, evaluation metric 1}, ..., {auxiliary hyperparameter sample T, evaluation metric T}.

Further, the neural predictor determines, based on the target hyperparameter combination, the auxiliary hyperparameter samples 1 to N, the evaluation metrics 1 to N respectively corresponding to the auxiliary hyperparameter samples 1 to N, and two anchor features, the prediction metric corresponding to the target hyperparameter combination. The two anchor features are used to calibrate an encoding feature of a lowest prediction metric of a target task and an encoding feature of a highest prediction metric of the target task.

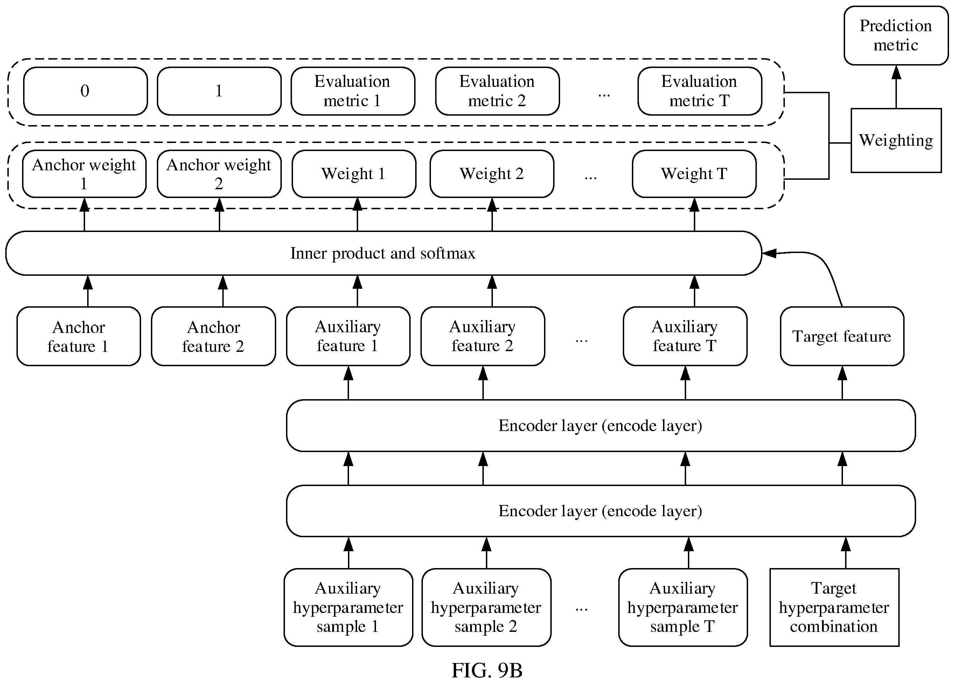

In some embodiments, when determining the prediction metric corresponding to the target hyperparameter combination, the neural predictor may perform joint encoding on the T auxiliary hyperparameter samples and the target hyperparameter combination to obtain T+1 features. For ease of distinguishing, encoded features corresponding to the T auxiliary hyperparameter samples are referred to as auxiliary features, and an encoded feature corresponding to the target hyperparameter combination is referred to as a target feature. For example, referring to FIG. 9B, the neural predictor includes at least one encoder layer (encoder layer), and the neural predictor performs joint encoding on the T+1 hyperparameter combinations (obtained by combining the T auxiliary hyperparameter samples and the target hyperparameter combination) by using the encoder layer. For a specific manner, refer to FIG. 8B. Details are not described herein again.

The neural predictor determines a similarity between the target feature and each of the T auxiliary features and a similarity between the target feature and each of the two anchor features. In FIG. 9A, the anchor feature of the encoding feature of the lowest prediction metric is referred to as an anchor feature 1, and the anchor feature of the encoding feature of the highest prediction metric is referred to as an anchor feature 2. Referring to FIG. 9B, an inner product manner may be used to determine the similarity. Then, the neural predictor determines, based on the similarity between the target feature and each of the T auxiliary features and the similarity between the target feature and the two anchor features, the T auxiliary hyperparameter samples and the weights respectively corresponding to the two anchor features. The neural predictor weights, based on the T auxiliary hyperparameter samples and the weights respectively corresponding to the two anchors, the evaluation metrics included in the T auxiliary hyperparameter samples and the prediction metrics corresponding to the two anchors, to obtain the prediction metric, of the target hyperparameter combination, output by the neural predictor. For example, referring to FIG. 9B, a prediction metric corresponding to the anchor feature 1 may be set to 0, and a prediction metric corresponding to the anchor feature 2 may be set to 1. In an example, when the similarity is converted into a weight, a softmax function may be used.

In some embodiments, the two anchor features can be learned, and the two anchor features may be understood as learnable parameters of the neural predictor. After initial configuration, during training of the neural predictor, the two anchor features may be simultaneously updated each time a weight of the neural predictor is updated. The processing procedure of the neural predictor shown in FIG. 9A and FIG. 9B is applicable to both a training process and an evaluation process. In the training process, the target hyperparameter combination also comes from the training set. In this way, a comparison result that is output by the neural predictor and that is between a prediction metric corresponding to a target hyperparameter combination and an evaluation metric that is in the hyperparameter sample and that is corresponding to the target hyperparameter combination is used to adjust a weight of the neural predictor and the two anchor features.

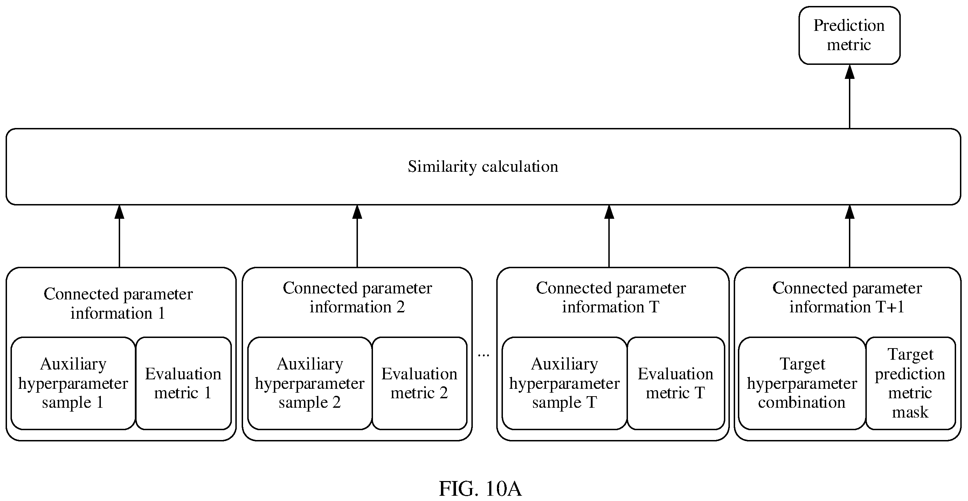

FIG. 10A is a schematic diagram of a processing procedure of still another neural predictor according to an embodiment of this application. An input to the neural predictor includes auxiliary hyperparameter samples, evaluation metrics corresponding to the T auxiliary hyperparameter samples, a target hyperparameter combination, and a target prediction metric mask corresponding to the target hyperparameter combination. In FIG. 10A, the T auxiliary hyperparameter samples are respectively referred to as auxiliary hyperparameter samples 1 to N, and evaluation metrics corresponding to the auxiliary hyperparameter samples 1 to N are respectively referred to as evaluation metrics 1 to N, namely, {auxiliary hyperparameter sample 1, evaluation metric 1}, ..., {auxiliary hyperparameter sample T, evaluation metric T}.

For example, when each auxiliary hyperparameter sample and a corresponding evaluation metric are input, the auxiliary hyperparameter sample and the corresponding evaluation metric may be connected to obtain connected parameter information, and then the connected parameter information is input to the neural predictor. {auxiliary hyperparameter sample 1, evaluation metric 1} is used as an example, and connected parameter information 1 is obtained after the auxiliary hyperparameter sample 1 is connected to the evaluation metric 1. Target connected parameter information is obtained by connecting a target hyperparameter combination and a target prediction metric mask. The target prediction metric mask represents an unknown prediction metric corresponding to the target hyperparameter combination. In some embodiments, the target prediction metric mask is learnable. After initial configuration, during training of the neural predictor, the target prediction metric mask may be updated each time a weight of the neural predictor is updated. The neural predictor performs similarity matching on every two pieces of connected parameter information in the T+1 pieces of input connected parameter information, to obtain a similarity between the every two pieces of connected parameter information. Further, the neural predictor determines, based on the similarity between the every two pieces of connected parameter information in the T+1 pieces of connected parameter information, the prediction metric corresponding to the target hyperparameter combination.

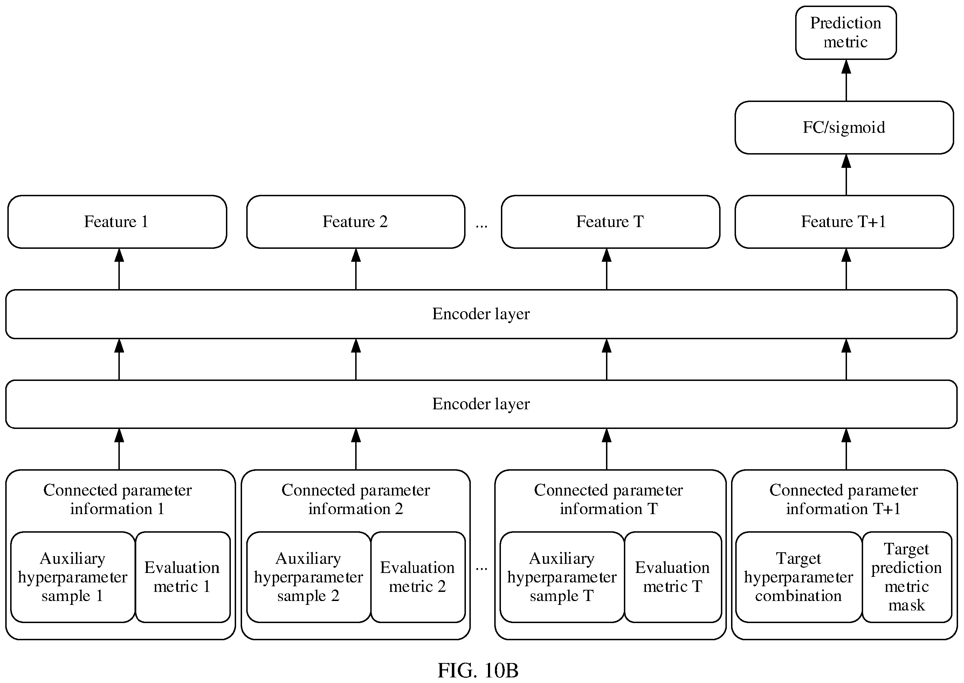

For example, referring to FIG. 10B, the neural predictor includes a plurality of encoder layers. In FIG. 10B, two encoder layers are used as an example. The neural predictor further includes an FC/sigmoid layer. The encoder layer may be a standard encoder layer in a transformer structure, and includes a self attention layer (Attention Layer) and a feedforward layer (feedforward layer). The self attention layer is configured to: perform similarity calculation on every two of the T+1 pieces of input connected parameter information to obtain a similarity matrix, and then weight the T+1 pieces of connected information based on the similarity matrix to obtain T+1 features. The T+1 features are sent to the feedforward layer, and the feedforward layer performs feature transformation on the T+1 features. The T+1 pieces of connected parameter information may be fused by using the plurality of encoder layers, to comprehensively predict the target prediction metric. Further, the feature corresponding to the target connected parameter information in the T+1 features output by the encoder layer is input to the FC/sigmoid layer. The neural predictor performs dimension reduction on the feature corresponding to the target connected parameter information by using the FC/sigmoid layer, to obtain a one-dimensional feature. The feature is normalized to a value between 0 and 1 by using the Sigmoid function, that is, the predicted target prediction metric corresponding to the target hyperparameter combination.

In some embodiments, the target prediction metric mask is learnable, and the target prediction metric mask may be understood as a learnable parameter of the neural predictor. After initial configuration, during training of the neural predictor, the target prediction metric mask may be updated each time a weight of the neural predictor is updated. The processing procedure of the neural predictor shown in FIG. 10A and FIG. 10B is applicable to both a training process and an evaluation process. In the training process, the target hyperparameter combination also comes from the training set. In this way, a comparison result that is output by the neural predictor and that is between a prediction metric corresponding to a target hyperparameter combination and an evaluation metric that is in the hyperparameter sample and that is corresponding to the target hyperparameter combination is used to adjust a weight of the neural predictor and the target prediction metric mask.

The following describes the solutions and effect provided in embodiments of this application with reference to a specific scenario. Hyperparameter optimization of a convolutional neural network (CNN) model is used as an example. The following uses an imagenet dataset as an example to describe how to perform cross validation. Certainly, another dataset may also be used. This is not specifically limited in this embodiment of this application.

The hyperparameter search space is defined as follows. Three values of a numeric respectively indicate a minimum value, a maximum value, and a stride of a hyperparameter.
lr is numeric(0.0005, 0.02, 0.00025), and indicates a learning rate;
wd is numeric(0.02, 0.4, 0.01), and indicates weight decay;
optim is categorical("AdamW", "LAMB"), and indicates an optimizer type;
dropout is numeric(0.0, 0.3, 0.025), and indicates a dropout probability;
drop_conn_rate is numeric(0.0, 0.4, 0.025), and indicates a drop connection probability;
mixup is numeric(0.0, 1.0, 0.05), and indicates a distribution parameter of mixup;
color is numeric(0.0, 0.5, 0.025), and indicates a color data enhancement strength; and
re_prob is numeric(0.0, 0.4, 0.025), and indicates a random erase probability.

The foregoing definition of the hyperparameter space is merely an example. In an actual application, any hyperparameter that needs to be optimized may be defined.

It should be noted that the optimizer is a parameter used to optimize a machine learning algorithm, for example, a network weight. The parameter may be optimized according to an optimization algorithm, for example, a gradient descent algorithm, a stochastic gradient descent algorithm, or an adaptive moment estimation (adaptive moment estimation, Adam) algorithm. A learning rate indicates amplitude of updating a parameter in each iteration in the optimization algorithm, and is also referred to as a stride. If the stride is too large, the algorithm does not converge, and an objective function of the model is unstable. If the stride is too small, a convergence speed of the model is too slow.

The data processing method shown in FIG. 4 is used as an example. K=16, and N=10.

A1. Initialize a neural predictor, and perform A2. It may be understood that an initial training set is empty.

A2. Sample 16 hyperparameter combinations from a hyperparameter search space, and perform A3.

A3. In an i^{th} round of an iterative sampling process, obtain an evaluation metric obtained through evaluation of the 16 hyperparameter combinations by a user task. An evaluation process and an evaluation result of the user task are not specifically limited in this embodiment of this application. The evaluation of the user task may be performed manually, or may be performed by using the user equipment.

A4. Use the 16 hyperparameter combinations and evaluation metrics corresponding to the 16 hyperparameter combinations as hyperparameter samples and update the hyperparameter samples to the training set.

A5. Perform iterative training on the neural predictor a plurality of times based on the training set, to obtain a neural predictor obtained in the i^{th} round of the sampling process. A quantity of iterative training rounds is not specifically limited in this embodiment of this application. For the training process, refer to the description of the embodiment corresponding to FIG. 3. Details are not described herein again.

A6. Sample 1000 hyperparameter combinations from the hyperparameter search space. It may be understood that the 1000 hyperparameter combinations are all different from the previously sampled hyperparameter combinations.

A7. Separately predict the 1000 hyperparameter combinations based on the training set by using the neural predictor obtained by using the i^{th} round of the sampling process, to obtain prediction metrics respectively corresponding to the 1000 hyperparameter combinations.

A8. Perform i=i+1. If i is greater than or equal to 10, the iterative sampling process ends; and if i is less than 10, A9 is performed. Herein, an example in which an iterative sampling stop condition is that a quantity of iterative sampling rounds reaches a maximum quantity of sampling rounds is used.

A9. Select 16 hyperparameter combinations with optimal prediction metrics from the 1000 hyperparameter combinations, and continue to perform A3.

In the foregoing manner, it is verified that when a Bayesian optimization level is reached by using the solution provided in this embodiment of this application, a sampling quantity in this embodiment of this application is less than a Bayesian optimization sampling quantity (namely, a quantity of manually confirmed prediction metrics). According to the solution provided in this embodiment of this application, embodiments of this application provide a data processing method, to assist in prediction of a target hyperparameter combination based on a training sample. Because evaluation results corresponding to the hyperparameter combination in a training sample are all verified by a user, accuracy is relatively high. The prediction of the target hyperparameter combination uses assistance of a training sample verified by a user. Compared with a case in which an existing common predictor whose input includes only the target hyperparameter combination, in the solution used in embodiments of this application, accuracy of a prediction result of predicting the target hyperparameter combination is higher. In the conventional technology, an input to a neural predictor includes only a target evaluation sample, and does not include other reference samples or evaluation metrics. Evaluation metrics of many real samples need to be obtained in advance to train the neural predictor. In this application, an input to the neural predictor includes a hyperparameter sample that already has an evaluation metric and the evaluation metric, and a prediction metric of a target sample has been predicted based on the evaluation metric of the hyperparameter sample, so that accuracy of predicting the prediction metric of the target sample is improved. Therefore, accuracy of adjusting a weight of the neural predictor based on the accuracy of the prediction metric is relatively high, and a quantity of training rounds is small, so that a quantity of used training samples is reduced. In the solution used in embodiments of this application, a small quantity of training samples are used to obtain a neural predictor with relatively good generalization.

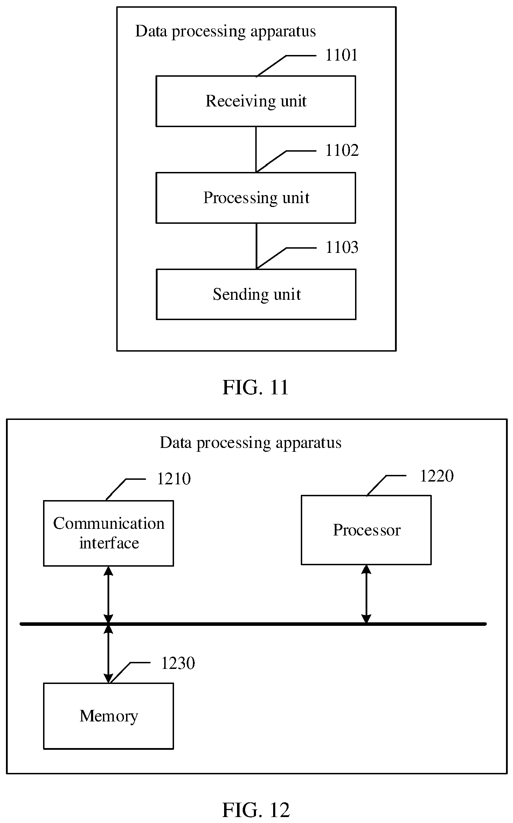

Based on a same inventive concept as the method embodiments, an embodiment of this application further provides a data processing apparatus. The apparatus may be specifically a processor in an execution device, a chip, a chip system, or a module in an execution device. For example, referring to FIG. 11, the apparatus may include a receiving unit 1101, a processing unit 1102, and a sending unit 1103. The receiving unit 1101, the processing unit 1102, and the sending unit 1103 are configured to perform the method steps shown in embodiments corresponding to FIG. 5A and FIG. 7.

The receiving unit 1101 is configured to receive hyperparameter information sent by user equipment, where the hyperparameter information indicates a hyperparameter search space corresponding to a user task.

The processing unit 1102 is configured to: sample a plurality of hyperparameter combinations from the hyperparameter search space; and use a first hyperparameter combination, a plurality of samples included in a training set, and evaluation metrics of the plurality of samples as inputs to a neural predictor, and determine, by using the neural predictor, a prediction metric corresponding to the first hyperparameter combination, to obtain a plurality of prediction metrics corresponding to the plurality of hyperparameter combinations, where the first hyperparameter combination is any one of the plurality of hyperparameter combinations.

The sending unit 1103 is configured to send K hyperparameter combinations to the user equipment, where K is a positive integer. K prediction metrics corresponding to the K hyperparameter combinations are highest K prediction metrics in the plurality of prediction metrics.

In a possible implementation, the receiving unit 1101 is further configured to receive K evaluation metrics that are corresponding to the K hyperparameter combinations and that are sent by the user equipment. The processing unit 1102 is further configured to: use the K hyperparameter combinations as K samples, and add the K samples and the corresponding K evaluation metrics to the training set.

In a possible implementation, the processing unit 1102 is further configured to obtain the neural predictor through training in the following manner: selecting a plurality of samples and evaluation metrics corresponding to the plurality of samples from the training set, and selecting a target sample from the training set; using the plurality of samples, the evaluation metrics corresponding to the plurality of samples, and the target sample as inputs to the neural predictor, and determining, by using the neural predictor, a prediction metric corresponding to the target sample; and adjusting network parameters of the neural predictor based on a result of comparison between the prediction metric of the target sample and an evaluation metric corresponding to the target sample.

In a possible implementation, the processing unit 1102 is specifically configured to: input the first hyperparameter combination, the plurality of samples included in the training set, and the evaluation metrics of the plurality of samples to the neural predictor; and determine, by using the neural predictor based on the first hyperparameter combination, the plurality of samples, the evaluation metrics of the plurality of samples, and two anchor features, the prediction metric corresponding to the first hyperparameter combination, where the two anchor features are used to calibrate an encoding feature of a lowest prediction metric of the user task and an encoding feature of a highest prediction metric of the user task.

In a possible implementation, a quantity of samples that are supported to be input to the neural predictor is T, and T is a positive integer. The processing unit 1102 is specifically configured to: encode T input samples by using the neural predictor, to obtain T auxiliary features, and encode the first hyperparameter combination to obtain a target feature; determine a similarity between the target feature and the T auxiliary features and a similarity between the target feature and the two anchor features by using the neural predictor; determine, by using the neural predictor, T+2 weights based on the similarity between the target feature and the T auxiliary features and the similarity between the target feature and the two anchor features, where the T+2 weights include weights of the T samples and weights of the two anchor features; and weight, by using the neural predictor, T+2 evaluation metrics based on the T+2 weights to obtain the prediction metric of the first hyperparameter combination, where the T+2 evaluation metrics include evaluation metrics of the T samples and evaluation metrics corresponding to the two anchor features.

In a possible implementation, the two anchor features are the network parameters of the neural predictor.

In a possible implementation, a quantity of samples that are supported to be input to the neural predictor is T. The processing unit 1102 is specifically configured to: encode T input samples by using the neural predictor, to obtain T auxiliary features, and encode the first hyperparameter combination to obtain a target feature; determine a similarity between the target feature and each of the T auxiliary features by using the neural predictor; determine, by using the neural predictor based on the similarity between the target feature and each of the T auxiliary features, weights respectively corresponding to the T samples; and weight, by using the neural predictor based on the weights respectively corresponding to the T samples, evaluation metrics corresponding to the T samples to obtain the prediction metric of the first hyperparameter combination.

In a possible implementation, a quantity of hyperparameter samples that are supported to be input to the neural predictor is T. The processing unit 1102 is specifically configured to: input T+1 pieces of connected parameter information to the neural predictor, where the T+1 pieces of connected parameter information include T pieces of connected parameter information obtained after each of T samples is connected to a corresponding evaluation metric and connected parameter information obtained after the first hyperparameter combination is connected to a target prediction metric mask, and the target prediction metric mask represents an unknown prediction metric corresponding to the first hyperparameter combination; perform similarity matching on every two pieces of connected parameter information in the T+1 pieces of input connected parameter information by using the neural predictor, to obtain a similarity between the every two pieces of connected parameter information; and determine, by using the neural predictor, the prediction metric of the first hyperparameter combination based on the similarity between the every two pieces of connected parameter information in the T+1 pieces of connected parameter information.

An embodiment of this application further provides another structure of the apparatus. As shown in FIG. 12, an apparatus 1200 may include a communication interface 1210 and a processor 1220. Optionally, the apparatus 1200 may further include a memory 1230. The memory 1230 may be disposed inside the apparatus, or may be disposed outside the apparatus. In an example, the receiving unit 1101, the processing unit 1102, and the sending unit 1103 shown in FIG. 11 may all be implemented by the processor 1220. In another example, functions of the receiving unit 1101 and the sending unit 1103 are implemented by the communication interface 1210. A function of the processing unit 1102 is implemented by the processor 1220. The processor 1220 receives hyperparameter information and sends a hyperparameter combination by using the communication interface 1210, and is configured to implement the methods in FIG. 5A and FIG. 7. In an implementation process, steps in a processing procedure may be implemented by using an integrated logic circuit of hardware in the processor 1220 or an instruction in a form of software, to complete the methods in FIG. 5A and FIG. 7.

The communication interface 1210 in this embodiment of this application may be a circuit, a bus, a transceiver, or any other apparatus that can be configured to exchange information. For example, the another apparatus may be a device connected to the apparatus 1200.

In embodiments of this application, the processor 1220 may be a general purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general purpose processor may be a microprocessor, or may be any conventional processor or the like. The steps of the method disclosed with reference to embodiments of this application may be directly performed by a hardware processor, or may be performed by using a combination of hardware and software units in the processor. Program code that is executed by the processor 1220 to implement the foregoing methods may be stored in the memory 1230. The memory 1230 is coupled to the processor 1220.

The coupling in this embodiment of this application is indirect coupling or a communication connection between apparatuses, units, or modules for information exchange between the apparatuses, the units, or the modules, and may be in electrical, mechanical, or other forms.

The processor 1220 may operate in collaboration with the memory 1230. The memory 1230 may be a nonvolatile memory such as a hard disk drive (hard disk drive, HDD) or a solid-state drive (solid-state drive, SSD); or may be a volatile memory (volatile memory) such as a random-access memory (random-access memory, RAM). The memory 1230 is any other medium that can be configured to carry or store desirable program code that has an instruction or a data structure form, and that can be accessed by a computer, but is not limited thereto.

In this embodiment of this application, a specific connection medium between the communication interface 1210, the processor 1220, and the memory 1230 is not limited. In this embodiment of this application, in FIG. 12, the memory 1230, the processor 1220, and the communication interface 1210 are connected through a bus. The bus is represented by a bold line in FIG. 12, and a connection mode between other parts is merely an example for description, and imposes no limitation. The bus may include an address bus, a data bus, a control bus, and the like. For ease of representation, only one bold line represents the bus in FIG. 12, but this does not mean that there is only one bus or only one type of bus.

Based on the foregoing embodiments, an embodiment of this application further provides a computer storage medium. The storage medium stores a software program, and when the software program is read and executed by one or more processors, the method provided in any one or more of the foregoing embodiments may be implemented. The computer storage medium may include: any medium that can store program code, such as a USB flash drive, a removable hard disk, a read-only memory, a random-access memory, a magnetic disk, or an optical disc.

Based on the foregoing embodiments, an embodiment of this application further provides a chip. The chip includes a processor, configured to implement a function in any one or more of the foregoing embodiments, for example, obtain or process information or a message in the foregoing method. Optionally, the chip further includes a memory, and the memory is configured to store necessary program instructions and data that are executed by the processor. The chip may include a chip, or may include a chip and another discrete device.

It may be clearly understood by a person skilled in the art that, for the purpose of convenient and brief description, for a detailed working process of the communication system described above, refer to a corresponding process in the foregoing method embodiments, and details are not described herein again.

An embodiment of this application provides a computer-readable medium, configured to store a computer program. The computer program includes an instruction used to perform the method steps in the method embodiment corresponding to FIG. 4.

In this specification, the claims, and the accompanying drawings of this application, terms "first", "second", "third", "fourth", and the like (if existent) are intended to distinguish between similar objects but do not necessarily indicate a specific order or sequence. It should be understood that the data used in such a way are interchangeable in appropriate circumstances, so that embodiments described herein can be implemented in an order other than the content illustrated or described herein. In addition, terms such as "include", "have", and any variations thereof are intended to cover non-exclusive inclusions, for example, a process, method, system, product, or device that includes a series of steps or units is not necessarily limited to those clearly listed steps or units, but may include other steps or units that are not clearly listed or inherent to such a process, method, product, or device.

It may be clearly understood by a person skilled in the art that, for the purpose of convenient and brief description, for a detailed working process of the communication system described above, refer to a corresponding process in the foregoing method embodiments, and details are not described herein again.

A person skilled in the art should understand that the embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims of this application.

## Claims

1. A data processing method, comprising:
receiving hyperparameter information sent by user equipment, wherein the hyperparameter information indicates a hyperparameter search space corresponding to a user task, wherein the user task is voice recognition;
sampling a plurality of hyperparameter combinations from the hyperparameter search space;
using a first hyperparameter combination, a plurality of samples comprised in a training set, and evaluation metrics of the plurality of samples as inputs to a neural predictor, and determining, by using the neural predictor, a prediction metric corresponding to the first hyperparameter combination, to obtain a plurality of prediction metrics corresponding to the plurality of hyperparameter combinations, wherein the first hyperparameter combination is any one of the plurality of hyperparameter combinations; and
sending K hyperparameter combinations to the user equipment, wherein K is a positive integer, and executing the user task on the user equipment based on the K hyperparameter combinations, wherein
K prediction metrics corresponding to the K hyperparameter combinations are highest K prediction metrics in the plurality of prediction metrics,
receiving K evaluation metrics that are corresponding to the K hyperparameter combinations and that are sent by the user equipment; and
using the K hyperparameter combinations as K samples, and adding the K samples and the corresponding K evaluation metrics to the training set,
wherein the using a first hyperparameter combination, a plurality of samples comprised in a training set, and evaluation metrics of the plurality of samples as inputs to a neural predictor, and determining, by using the neural predictor, a prediction metric corresponding to the first hyperparameter combination comprises:
inputting the first hyperparameter combination, the plurality of samples comprised in the training set, and the evaluation metrics of the plurality of samples to the neural predictor; and
determining, by using the neural predictor based on the first hyperparameter combination, the plurality of samples, the evaluation metrics of the plurality of samples, and two anchor features, the prediction metric corresponding to the first hyperparameter combination, wherein
the two anchor features are used to calibrate an encoding feature of a lowest prediction metric of the user task and an encoding feature of a highest prediction metric of the user task,
wherein all the method steps except for the execution of the user task are performed by an execution device.

2. The method according to claim 1, wherein the neural predictor is obtained through training in the following manner:
selecting a plurality of samples and evaluation metrics corresponding to the plurality of samples from the training set, and selecting a target sample from the training set;
using the plurality of samples, the evaluation metrics corresponding to the plurality of samples, and the target sample as inputs to the neural predictor, and determining, by using the neural predictor, a prediction metric corresponding to the target sample; and
adjusting network parameters of the neural predictor based on a result of comparison between the prediction metric of the target sample and an evaluation metric corresponding to the target sample.

3. The method according to claim 1, wherein a quantity of samples that are supported to be input to the neural predictor is T, and T is a positive integer; and the determining, by using the neural predictor based on the first hyperparameter combination, the plurality of samples, the evaluation metrics of the plurality of samples, and two anchor features, the prediction metric corresponding to the first hyperparameter combination comprises:
encoding T input samples by using the neural predictor, to obtain T auxiliary features, and encoding the first hyperparameter combination to obtain a target feature;
determining a similarity between the target feature and the T auxiliary features and a similarity between the target feature and the two anchor features by using the neural predictor;
determining, by using the neural predictor, T+2 weights based on the similarity between the target feature and the T auxiliary features and the similarity between the target feature and the two anchor features, wherein the T+2 weights comprise weights of the T samples and weights of the two anchor features; and
weighting, by using the neural predictor, T+2 evaluation metrics based on the T+2 weights to obtain the prediction metric of the first hyperparameter combination, wherein
the T+2 evaluation metrics comprise evaluation metrics of the T samples and evaluation metrics corresponding to the two anchor features.

4. The method according to claim 1 or 3, wherein the two anchor features are the network parameters of the neural predictor.

5. The method according to claim 1 or 2, wherein a quantity of hyperparameter samples that are supported to be input to the neural predictor is T, and T is a positive integer; and the using a first hyperparameter combination, a plurality of samples comprised in a training set, and evaluation metrics of the plurality of samples as inputs to a neural predictor, and determining, by using the neural predictor, a prediction metric corresponding to the first hyperparameter combination comprises:
inputting T+1 pieces of connected parameter information to the neural predictor, wherein the T+1 pieces of connected parameter information comprise T pieces of connected parameter information obtained after each of T samples is connected to a corresponding evaluation metric and connected parameter information obtained after the first hyperparameter combination is connected to a target prediction metric mask, and the target prediction metric mask represents an unknown prediction metric corresponding to the first hyperparameter combination;
performing similarity matching on every two pieces of connected parameter information in the T+1 pieces of input connected parameter information by using the neural predictor, to obtain a similarity between the every two pieces of connected parameter information; and
determining, by using the neural predictor, the prediction metric of the first hyperparameter combination based on the similarity between the every two pieces of connected parameter information in the T+1 pieces of connected parameter information.

6. A data processing apparatus, comprising:
a receiving unit (1101), configured to receive hyperparameter information sent by user equipment, wherein the hyperparameter information indicates a hyperparameter search space corresponding to a user task, wherein the user task is voice recognition;
a processing unit (1102), configured to: sample a plurality of hyperparameter combinations from the hyperparameter search space; and use a first hyperparameter combination, a plurality of samples comprised in a training set, and evaluation metrics of the plurality of samples as inputs to a neural predictor, and determine, by using the neural predictor, a prediction metric corresponding to the first hyperparameter combination, to obtain a plurality of prediction metrics corresponding to the plurality of hyperparameter combinations, wherein the first hyperparameter combination is any one of the plurality of hyperparameter combinations; and
a sending unit (1103), configured to send K hyperparameter combinations to the user equipment, wherein K is a positive integer, for execution of the user task on the user equipment based on the K hyperparameter combinations, wherein
K prediction metrics corresponding to the K hyperparameter combinations are highest K prediction metrics in the plurality of prediction metrics,
wherein the receiving unit is further configured to receive K evaluation metrics that are corresponding to the K hyperparameter combinations and that are sent by the user equipment; and
the processing unit is further configured to: use the K hyperparameter combinations as K samples, and add the K samples and the corresponding K evaluation metrics to the training set,
wherein the processing unit is further configured such that the using a first hyperparameter combination, a plurality of samples comprised in a training set, and evaluation metrics of the plurality of samples as inputs to a neural predictor, and determining, by using the neural predictor, a prediction metric corresponding to the first hyperparameter combination comprises:
inputting the first hyperparameter combination, the plurality of samples comprised in the training set, and the evaluation metrics of the plurality of samples to the neural predictor; and
determining, by using the neural predictor based on the first hyperparameter combination, the plurality of samples, the evaluation metrics of the plurality of samples, and two anchor features, the prediction metric corresponding to the first hyperparameter combination, wherein
the two anchor features are used to calibrate an encoding feature of a lowest prediction metric of the user task and an encoding feature of a highest prediction metric of the user task.

7. The apparatus according to claim 6, wherein the processing unit is further configured to obtain the neural predictor through training in the following manner:
selecting a plurality of samples and evaluation metrics corresponding to the plurality of samples from the training set, and selecting a target sample from the training set;
using the plurality of samples, the evaluation metrics corresponding to the plurality of samples, and the target sample as inputs to the neural predictor, and determining, by using the neural predictor, a prediction metric corresponding to the target sample; and
adjusting network parameters of the neural predictor based on a result of comparison between the prediction metric of the target sample and an evaluation metric corresponding to the target sample.

## Patentansprüche

1. Datenverarbeitungsverfahren, das umfasst:
Empfangen von Hyperparameterinformationen, die durch eine Benutzereinrichtung gesendet werden, wobei die Hyperparameterinformationen einen Hyperparametersuchraum, der einer Benutzeraufgabe entspricht, angeben, wobei die Benutzeraufgabe Spracherkennung ist;
Abtasten einer Vielzahl von Hyperparameterkombinationen aus dem Hyperparametersuchraum;
Verwenden einer ersten Hyperparameterkombination, einer Vielzahl von Abtastwerten, die in einem Trainingsdatensatz umfasst sind, und von Bewertungsmetriken der Vielzahl von Abtastwerten als Eingaben in einen neuronalen Prädiktor, und Bestimmen, durch Verwenden des neuronalen Prädiktors, einer Prädiktionsmetrik, die der ersten Hyperparameterkombination entspricht, um eine Vielzahl von Prädiktionsmetriken, die der Vielzahl von Hyperparameterkombinationen entsprechen, zu erhalten, wobei die erste Hyperparameterkombination eine beliebige der Vielzahl von Hyperparameterkombinationen ist; und
Senden von K Hyperparameterkombinationen an die Benutzereinrichtung, wobei K eine positive ganze Zahl ist, und Ausführen der Benutzeraufgabe auf der Benutzereinrichtung basierend auf den K Hyperparameterkombinationen, wobei
K Prädiktionsmetriken, die den K Hyperparameterkombinationen entsprechen, die höchsten K Prädiktionsmetriken in der Vielzahl von Prädiktionsmetriken sind,
Empfangen von K Bewertungsmetriken, die den K Hyperparameterkombinationen entsprechen und die durch die Benutzereinrichtung gesendet werden; und
Verwenden der K Hyperparameterkombinationen als K Abtastwerte und Hinzufügen der K Abtastwerte und der entsprechenden K Bewertungsmetriken zu dem Trainingsdatensatz,
wobei das Verwenden einer ersten Hyperparameterkombination, einer Vielzahl von Abtastwerten, die in einem Trainingsdatensatz umfasst sind, und von Bewertungsmetriken der Vielzahl von Abtastwerten als Eingaben in einen neuronalen Prädiktor und das Bestimmen, durch Verwenden des neuronalen Prädiktors, einer Prädiktionsmetrik, die der ersten Hyperparameterkombination entspricht, umfasst:
Eingeben der ersten Hyperparameterkombination, der Vielzahl von Abtastwerten, die in dem Trainingsdatensatz umfasst sind, und der Bewertungsmetriken der Vielzahl von Abtastwerten in den neuronalen Prädiktor; und
Bestimmen, durch Verwenden des neuronalen Prädiktors basierend auf der ersten Hyperparameterkombination, der Vielzahl von Abtastwerten, den Bewertungsmetriken der Vielzahl von Abtastwerten und zwei Ankermerkmalen, der Prädiktionsmetrik, die der ersten Hyperparameterkombination entspricht, wobei
die zwei Ankermerkmale verwendet werden, um ein Codierungsmerkmal einer niedrigsten Prädiktionsmetrik der Benutzeraufgabe und ein Codierungsmerkmal einer höchsten Prädiktionsmetrik der Benutzeraufgabe zu kalibrieren,
wobei alle Verfahrensschritte mit Ausnahme der Ausführung der Benutzeraufgabe durch eine Ausführungsvorrichtung durchgeführt werden.

2. Verfahren nach Anspruch 1, wobei der neuronale Prädiktor durch Trainieren auf die folgende Weise erhalten wird:
Auswählen einer Vielzahl von Abtastwerten und Bewertungsmetriken, die der Vielzahl von Abtastwerten entspricht, aus dem Trainingsdatensatz, und Auswählen eines Zielabtastwerts aus dem Trainingsdatensatz;
Verwenden der Vielzahl von Abtastwerten, der Bewertungsmetriken, die der Vielzahl von Abtastwerten entsprechen, und des Zielabtastwerts als Eingaben in den neuronalen Prädiktor, und Bestimmen, durch Verwenden des neuronalen Prädiktors, einer Prädiktionsmetrik, die dem Zielabtastwert entspricht; und
Anpassen von Netzwerkparametern des neuronalen Prädiktors basierend auf einem Ergebnis eines Vergleichs zwischen der Prädiktionsmetrik des Zielabtastwerts und einer Bewertungsmetrik, die dem Zielabtastwert entspricht.

3. Verfahren nach Anspruch 1, wobei eine Anzahl von Abtastwerten, deren Eingabe in den neuronalen Prädiktor unterstützt wird, T ist, und T eine positive ganze Zahl ist; und das Bestimmen, durch Verwenden des neuronalen Prädiktors basierend auf der ersten Hyperparameterkombination, der Vielzahl von Abtastwerten, der Bewertungsmetriken der Vielzahl von Abtastwerten und zwei Ankermerkmalen, der Prädiktionsmetrik, die der ersten Hyperparameterkombination entspricht, umfasst:
Codieren von T Eingabeabtastwerten durch Verwenden des neuronalen Prädiktors, um T Hilfsmerkmale zu erhalten, und Codieren der ersten Hyperparameterkombination, um ein Zielmerkmal zu erhalten;
Bestimmen einer Ähnlichkeit zwischen dem Zielmerkmal und den T Hilfsmerkmalen und einer Ähnlichkeit zwischen dem Zielmerkmal und den zwei Ankermerkmalen durch Verwenden des neuronalen Prädiktors;
Bestimmen, durch Verwenden des neuronalen Prädiktors, von T+2 Gewichten basierend auf der Ähnlichkeit zwischen dem Zielmerkmal und den T Hilfsmerkmalen und der Ähnlichkeit zwischen dem Zielmerkmal und den zwei Ankermerkmalen, wobei die T+2 Gewichte Gewichte der T Abtastwerte und Gewichte der zwei Ankermerkmale umfassen; und
Gewichten, durch Verwenden des neuronalen Prädiktors, von T+2 Bewertungsmetriken basierend auf den T+2 Gewichten, um die Prädiktionsmetrik der ersten Hyperparameterkombination zu erhalten, wobei
die T+2 Bewertungsmetriken Bewertungsmetriken der T Abtastwerte und Bewertungsmetriken, die den zwei Ankermerkmalen entsprechen, umfassen.

4. Verfahren nach Anspruch 1 oder 3, wobei die zwei Ankermerkmale die Netzwerkparameter des neuronalen Prädiktors sind.

5. Verfahren nach Anspruch 1 oder 2, wobei eine Anzahl von Hyperparameterabtastwerten, die als Eingabe in den neuronalen Prädiktor unterstützt werden, T ist, und T eine positive ganze Zahl ist; und das Verwenden einer ersten Hyperparameterkombination, einer Vielzahl von Abtastwerten, die in einem Trainingsdatensatz umfasst sind, und von Bewertungsmetriken der Vielzahl von Abtastwerten als Eingaben in einen neuronalen Prädiktor und das Bestimmen, durch Verwenden des neuronalen Prädiktors, einer Prädiktionsmetrik, die der ersten Hyperparameterkombination entspricht, umfasst:
Eingeben von T+1 Elementen verbundener Parameterinformationen in den neuronalen Prädiktor, wobei die T+1 Elemente verbundener Parameterinformationen T Elemente verbundener Parameterinformationen, die erhalten werden, nachdem jedes von T Abtastwerten mit einer entsprechenden Bewertungsmetrik verbunden wurde, und verbundene Parameterinformationen umfassen, die erhalten werden, nachdem die erste Hyperparameterkombination mit einer Zielprädiktionsmetrikmaske verbunden wurde, und die Zielprädiktionsmetrikmaske eine unbekannte Prädiktionsmetrik, die der ersten Hyperparameterkombination entspricht, darstellt;
Durchführen eines Ähnlichkeitsabgleichs an jeweils zwei Elementen von verbundenen Parameterinformationen in den T+1 Elementen von eingegebenen verbundenen Parameterinformationen durch Verwenden des neuronalen Prädiktors, um eine Ähnlichkeit zwischen den jeweils zwei Elementen von verbundenen Parameterinformationen zu erhalten; und
Bestimmen, durch Verwenden des neuronalen Prädiktors, der Prädiktionsmetrik der ersten Hyperparameterkombination basierend auf der Ähnlichkeit zwischen jeweils zwei Elementen von verbundenen Parameterinformationen in den T+1 Elementen von verbundenen Parameterinformationen.

6. Datenverarbeitungsapparat, die umfasst:
eine Empfangseinheit (1101), die konfiguriert ist, um Hyperparameterinformationen, die durch die Benutzereinrichtung gesendet werden, zu empfangen, wobei die Hyperparameterinformationen einen Hyperparametersuchraum, der einer Benutzeraufgabe entspricht, angeben, wobei die Benutzeraufgabe Spracherkennung ist;
eine Verarbeitungseinheit (1102), die konfiguriert ist zum: Abtasten einer Vielzahl von Hyperparameterkombinationen aus dem Hyperparametersuchraum; und Verwenden einer ersten Hyperparameterkombination, einer Vielzahl von Abtastwerten, die in einem Trainingsdatensatz umfasst sind, und von Bewertungsmetriken der Vielzahl von Abtastwerten als Eingaben in einen neuronalen Prädiktor, und Bestimmen, durch Verwenden des neuronalen Prädiktors, einer Prädiktionsmetrik, die der ersten Hyperparameterkombination entspricht, um eine Vielzahl von Prädiktionsmetriken, die der Vielzahl von Hyperparameterkombinationen entsprechen, zu erhalten, wobei die erste Hyperparameterkombination eine beliebige der Vielzahl von Hyperparameterkombinationen ist; und
eine Sendeeinheit (1103), die konfiguriert ist, um K Hyperparameterkombinationen an die Benutzereinrichtung, wobei K eine positive ganze Zahl ist, für die Ausführung der Benutzeraufgabe auf der Benutzereinrichtung basierend auf den K Hyperparameterkombinationen zu senden, wobei
K Prädiktionsmetriken, die den K Hyperparameterkombinationen entsprechen, die höchsten K Prädiktionsmetriken in der Vielzahl von Prädiktionsmetriken sind,
wobei die Empfangseinheit ferner konfiguriert ist, um K Bewertungsmetriken, die den K Hyperparameterkombinationen entsprechen und die durch die Benutzereinrichtung gesendet werden, zu empfangen; und
die Verarbeitungseinheit ferner konfiguriert ist zum: Verwenden der K Hyperparameterkombinationen als K Abtastwerte und Hinzufügen der K Abtastwerte und der entsprechenden K Bewertungsmetriken zu dem Trainingsdatensatz,
wobei die Verarbeitungseinheit ferner derart konfiguriert ist, dass das Verwenden einer ersten Hyperparameterkombination, einer Vielzahl von Abtastwerten, die in einem Trainingsdatensatz umfasst sind, und von Bewertungsmetriken der Vielzahl von Abtastwerten als Eingaben in einen neuronalen Prädiktor und das Bestimmen, durch Verwenden des neuronalen Prädiktors, einer Prädiktionsmetrik, die der ersten Hyperparameterkombination entspricht, umfasst:
Eingeben der ersten Hyperparameterkombination, der Vielzahl von Abtastwerten, die in dem Trainingsdatensatz umfasst sind, und der Bewertungsmetriken der Vielzahl von Abtastwerten in den neuronalen Prädiktor; und
Bestimmen, durch Verwenden des neuronalen Prädiktors basierend auf der ersten Hyperparameterkombination, der Vielzahl von Abtastwerten, den Bewertungsmetriken der Vielzahl von Abtastwerten und zwei Ankermerkmalen, der Prädiktionsmetrik, die der ersten Hyperparameterkombination entspricht, wobei
die zwei Ankermerkmale verwendet werden, um ein Codierungsmerkmal einer niedrigsten Prädiktionsmetrik der Benutzeraufgabe und ein Codierungsmerkmal einer höchsten Prädiktionsmetrik der Benutzeraufgabe zu kalibrieren.

7. Apparat nach Anspruch 6, wobei die Verarbeitungseinheit ferner konfiguriert ist, um den neuronalen Prädiktor durch Trainieren auf die folgende Weise zu erhalten:
Auswählen einer Vielzahl von Abtastwerten und Bewertungsmetriken, die der Vielzahl von Abtastwerten entspricht, aus dem Trainingsdatensatz, und Auswählen eines Zielabtastwerts aus dem Trainingsdatensatz;
Verwenden der Vielzahl von Abtastwerten, der Bewertungsmetriken, die der Vielzahl von Abtastwerten entsprechen, und des Zielabtastwerts als Eingaben in den neuronalen Prädiktor, und Bestimmen, durch Verwenden des neuronalen Prädiktors, einer Prädiktionsmetrik, die dem Zielabtastwert entspricht; und
Anpassen von Netzwerkparametern des neuronalen Prädiktors basierend auf einem Ergebnis eines Vergleichs zwischen der Prädiktionsmetrik des Zielabtastwerts und einer Bewertungsmetrik, die dem Zielabtastwert entspricht.

## Revendications

1. Procédé de traitement de données, comprenant:
la réception d'informations d'hyperparamètre envoyées par un équipement utilisateur, dans lequel les informations d'hyperparamètre indiquent un espace de recherche d'hyperparamètre correspondant à une tâche d'utilisateur, dans lequel la tâche d'utilisateur est une reconnaissance vocale;
l'échantillonnage d'une pluralité de combinaisons d'hyperparamètres à partir de l'espace de recherche d'hyperparamètre;
l'utilisation d'une première combinaison d'hyperparamètres, d'une pluralité d'échantillons compris dans un ensemble d'entraînement et de mesures d'évaluation de la pluralité d'échantillons en tant qu'entrées dans un prédicteur neuronal, et la détermination, en utilisant le prédicteur neuronal, d'une mesure de prédiction correspondant à la première combinaison d'hyperparamètres, afin d'obtenir une pluralité de mesures de prédiction correspondant à la pluralité de combinaisons d'hyperparamètres, dans lequel la première combinaison d'hyperparamètres est l'une quelconque de la pluralité de combinaisons d'hyperparamètres; et
l'envoi de K combinaisons d'hyperparamètres à l'équipement utilisateur, dans lequel K est un nombre entier positif, et l'exécution de la tâche d'utilisateur sur l'équipement utilisateur sur la base des K combinaisons d'hyperparamètres, dans lequel
K mesures de prédiction correspondant aux K combinaisons d'hyperparamètres sont K mesures de prédiction les plus élevées dans la pluralité de mesures de prédiction, la réception de K mesures d'évaluation qui correspondent aux K combinaisons d'hyperparamètres et qui sont envoyées par l'équipement utilisateur; et
l'utilisation des K combinaisons d'hyperparamètres en tant que K échantillons, et l'ajout des K échantillons et des K mesures d'évaluation correspondantes à l'ensemble d'entraînement,
dans lequel l'utilisation d'une première combinaison d'hyperparamètres, d'une pluralité d'échantillons compris dans un ensemble d'entraînement et de mesures d'évaluation de la pluralité d'échantillons en tant qu'entrées dans un prédicteur neuronal, et la détermination, en utilisant le prédicteur neuronal, d'une mesure de prédiction correspondant à la première combinaison d'hyperparamètres comprend:
l'entrée de la première combinaison d'hyperparamètres, de la pluralité d'échantillons compris dans l'ensemble d'entraînement et des mesures d'évaluation de la pluralité d'échantillons dans le prédicteur neuronal; et
la détermination, en utilisant le prédicteur neuronal basé sur la première combinaison d'hyperparamètres, de la pluralité d'échantillons, des mesures d'évaluation de la pluralité d'échantillons et de deux caractéristiques d'ancrage, la mesure de prédiction correspondant à la première combinaison d'hyperparamètres, dans lequel
les deux caractéristiques d'ancrage sont utilisées pour étalonner une caractéristique de codage d'une mesure de prédiction la plus basse de la tâche d'utilisateur et une caractéristique de codage d'une mesure de prédiction la plus élevée de la tâche d'utilisateur, dans lequel toutes les étapes de procédé, à l'exception de l'exécution de la tâche d'utilisateur, sont réalisées par un dispositif d'exécution.

2. Procédé selon la revendication 1, dans lequel le prédicteur neuronal est obtenu par un entraînement de la manière suivante:
la sélection d'une pluralité d'échantillons et de mesures d'évaluation correspondant à la pluralité d'échantillons parmi l'ensemble d'entraînement, et la sélection d'un échantillon cible parmi l'ensemble d'entraînement;
l'utilisation de la pluralité d'échantillons, des mesures d'évaluation correspondant à la pluralité d'échantillons et de l'échantillon cible en tant qu'entrées dans le prédicteur neuronal, et la détermination, en utilisant le prédicteur neuronal, d'une mesure de prédiction correspondant à l'échantillon cible; et
l'ajustement de paramètres de réseau du prédicteur neuronal sur la base d'un résultat de comparaison entre la mesure de prédiction de l'échantillon cible et une mesure d'évaluation correspondant à l'échantillon cible.

3. Procédé selon la revendication 1, dans lequel une quantité d'échantillons qui sont pris en charge pour être entrés dans le prédicteur neuronal est T, et T est un nombre entier positif; et la détermination, en utilisant le prédicteur neuronal basé sur la première combinaison d'hyperparamètres, de la pluralité d'échantillons, des mesures d'évaluation de la pluralité d'échantillons et de deux caractéristiques d'ancrage, la mesure de prédiction correspondant à la première combinaison d'hyperparamètres comprend:
le codage de T échantillons d'entrée en utilisant le prédicteur neuronal, pour obtenir T caractéristiques auxiliaires, et le codage de la première combinaison d'hyperparamètres pour obtenir une caractéristique cible;
la détermination d'une similarité entre la caractéristique cible et les T caractéristiques auxiliaires et d'une similarité entre la caractéristique cible et les deux caractéristiques d'ancrage en utilisant le prédicteur neuronal;
la détermination, en utilisant le prédicteur neuronal, de T + 2 poids sur la base de la similarité entre la caractéristique cible et les T caractéristiques auxiliaires et de la similarité entre la caractéristique cible et les deux caractéristiques d'ancrage, dans lequel les T + 2 poids comprennent des poids des T échantillons et des poids des deux caractéristiques d'ancrage; et
la pondération, en utilisant le prédicteur neuronal, de T + 2 mesures d'évaluation sur la base des T + 2 poids pour obtenir la mesure de prédiction de la première combinaison d'hyperparamètres, dans lequel
les T + 2 mesures d'évaluation comprennent des mesures d'évaluation des T échantillons et des mesures d'évaluation correspondant aux deux caractéristiques d'ancrage.

4. Procédé selon la revendication 1 ou 3, dans lequel les deux caractéristiques d'ancrage sont les paramètres de réseau du prédicteur neuronal.

5. Procédé selon la revendication 1 ou 2, dans lequel une quantité d'échantillons d'hyperparamètres qui sont pris en charge pour être entrés dans le prédicteur neuronal est T, et T est un nombre entier positif; et l'utilisation d'une première combinaison d'hyperparamètres, d'une pluralité d'échantillons compris dans un ensemble d'entraînement et de mesures d'évaluation de la pluralité d'échantillons en tant qu'entrées dans un prédicteur neuronal, et la détermination, en utilisant le prédicteur neuronal, d'une mesure de prédiction correspondant à la première combinaison d'hyperparamètres comprend:
l'entrée de T + 1 éléments d'informations de paramètres connectés dans le prédicteur neuronal, dans lequel les T + 1 éléments d'informations de paramètres connectés comprennent T éléments d'informations de paramètres connectés obtenus après la connexion de chacun de T échantillons à une mesure d'évaluation correspondante et des informations de paramètres connectés obtenues après la connexion de la première combinaison d'hyperparamètres à un masque mesure de prédiction cible, et le masque de mesure de prédiction cible représente une mesure de prédiction inconnue correspondant à la première combinaison d'hyperparamètres;
la réalisation d'une mise en correspondance de similarité sur chaque deux éléments d'informations de paramètres connectés dans les T + 1 éléments d'informations de paramètres connectés d'entrée en utilisant le prédicteur neuronal, pour obtenir une similarité entre les chaque deux éléments d'informations de paramètres connectés; et la détermination, en utilisant le prédicteur neuronal, de la mesure de prédiction de la première combinaison d'hyperparamètres sur la base de la similarité entre les chaque deux éléments d'informations de paramètres connectés dans les T + 1 éléments d'informations de paramètres connectés.

6. Appareil de traitement de données, comprenant:
une unité de réception (1101), configurée pour recevoir des informations d'hyperparamètre envoyées par un équipement utilisateur, dans lequel les informations d'hyperparamètre indiquent un espace de recherche d'hyperparamètre correspondant à une tâche d'utilisateur, dans lequel la tâche d'utilisateur est une reconnaissance vocale;
une unité de traitement (1102), configurée pour: échantillonner une pluralité de combinaisons d'hyperparamètres à partir de l'espace de recherche d'hyperparamètre; et utiliser une première combinaison d'hyperparamètres, une pluralité d'échantillons compris dans un ensemble d'entraînement et des mesures d'évaluation de la pluralité d'échantillons en tant qu'entrées dans un prédicteur neuronal, et déterminer, en utilisant le prédicteur neuronal, une mesure de prédiction correspondant à la première combinaison d'hyperparamètres, afin d'obtenir une pluralité de mesures de prédiction correspondant à la pluralité de combinaisons d'hyperparamètres, dans lequel la première combinaison d'hyperparamètres est l'une quelconque de la pluralité de combinaisons d'hyperparamètres; et
une unité d'envoi (1103), configurée pour envoyer K combinaisons d'hyperparamètres à l'équipement utilisateur, dans lequel K est un nombre entier positif, pour l'exécution de la tâche d'utilisateur sur l'équipement utilisateur sur la base des K combinaisons d'hyperparamètres, dans lequel
K mesures de prédiction correspondant aux K combinaisons d'hyperparamètres sont K mesures de prédiction les plus élevées dans la pluralité de mesures de prédiction, dans lequel l'unité de réception est en outre configurée pour recevoir K mesures d'évaluation qui correspondent aux K combinaisons d'hyperparamètres et qui sont envoyées par l'équipement utilisateur; et
l'unité de traitement est en outre configurée pour: utiliser les K combinaisons d'hyperparamètres en tant que K échantillons, et ajouter les K échantillons et les K mesures d'évaluation correspondantes à l'ensemble d'entraînement,
dans lequel l'unité de traitement est en outre configurée de telle sorte que l'utilisation d'une première combinaison d'hyperparamètres, d'une pluralité d'échantillons compris dans un ensemble d'entraînement et de mesures d'évaluation de la pluralité d'échantillons en tant qu'entrées dans un prédicteur neuronal, et la détermination, en utilisant le prédicteur neuronal, d'une mesure de prédiction correspondant à la première combinaison d'hyperparamètres comprend:
l'entrée de la première combinaison d'hyperparamètres, de la pluralité d'échantillons compris dans l'ensemble d'entraînement et des mesures d'évaluation de la pluralité d'échantillons dans le prédicteur neuronal; et
la détermination, en utilisant le prédicteur neuronal basé sur la première combinaison d'hyperparamètres, de la pluralité d'échantillons, des mesures d'évaluation de la pluralité d'échantillons et de deux caractéristiques d'ancrage, la mesure de prédiction correspondant à la première combinaison d'hyperparamètres, dans lequel
les deux caractéristiques d'ancrage sont utilisées pour étalonner une caractéristique de codage d'une mesure de prédiction la plus basse de la tâche d'utilisateur et une caractéristique de codage d'une mesure de prédiction la plus élevée de la tâche d'utilisateur.

7. Appareil selon la revendication 6, dans lequel l'unité de traitement est en outre configurée pour obtenir le prédicteur neuronal par entraînement de la manière suivante:
la sélection d'une pluralité d'échantillons et de mesures d'évaluation correspondant à la pluralité d'échantillons parmi l'ensemble d'entraînement, et la sélection d'un échantillon cible parmi l'ensemble d'entraînement;
l'utilisation de la pluralité d'échantillons, des mesures d'évaluation correspondant à la pluralité d'échantillons et de l'échantillon cible en tant qu'entrées dans le prédicteur neuronal, et la détermination, en utilisant le prédicteur neuronal, d'une mesure de prédiction correspondant à l'échantillon cible; et
l'ajustement de paramètres de réseau du prédicteur neuronal sur la base d'un résultat de comparaison entre la mesure de prédiction de l'échantillon cible et une mesure d'évaluation correspondant à l'échantillon cible.
